# EUROPEAN PATENT APPLICATION

(11) **EP 4 521 814 A2**
(43) Date of publication of application: **12.03.2025**
(21) Application number: 24194335.6
(22) Date of filing: 13.08.2024
(51) Int. Cl.: H04W 28/02, H04W 48/18

(54) **TECHNOLOGIES FOR INTELLIGENT SLICE PRIORITIZATION**

(30) Priority: 17.08.2023 US 202363533315 P; 17.07.2024 US 202418775542
(71) Applicant: Apple Inc., Cupertino, CA 95014 (US)
(72) Inventor: PRABHAKAR, Alosious Pradeep, 569086 Singapore (SG); MATOLIA, Rohit R., 560001 Bangalore, Karnataka (IN); VENKATARAMAN, Vijay, Cupertino, CA, 95014 (US)
(74) Representative: Lang, Johannes

(57) **Abstract**

The present application relates to devices and components, including apparatus, systems, and methods for slice prioritization implementation for frequency re-selection.

## Description

### CROSS-REFERENCES TO OTHER APPLICATIONS

This application claims priority to U.S. Provisional Application No. 63/533,315, for "TECHNOLOGIES FOR INTELLIGENT SLICE PRIORITIZATION," filed on August 17, 2023, and U.S. nonprovisional patent application No. 18/775,542, for "TECHNOLOGIES FOR INTELLIGENT SLICE PRIORITIZATION", filed July 17, 2024, which are herein incorporated by reference in their entireties for all purposes.

### TECHNICAL FIELD

This application generally relates to cellular communication networks and, in particular, to technologies for slice prioritization at the user equipment.

### BACKGROUND

Slice prioritization at the user equipment (UE) is a way of allocating network resources to different types of services or applications that require different levels of quality of service (QoS). For example, a video streaming service may need a high data rate but can tolerate some delay, while a remote surgery application may need a low latency but can use less bandwidth. By creating separate slices that prioritize specific resources, operators can offer tailored solutions to different applications.

### BRIEF DESCRIPTION OF THE DRAWINGS

FIG. 1 illustrates a network environment in accordance with some embodiments.
FIG. 2 illustrates some aspects of the network slice access group in accordance with some embodiments.
FIG. 3 illustrates some aspects of slice prioritization in accordance with some embodiments.
FIG. 4 illustrates some aspects of slice prioritization in accordance with some embodiments.
FIG. 5 illustrates an operational flow/algorithmic structure in accordance with some embodiments.
FIG. 6 illustrates some aspects of slice prioritization in accordance with some embodiments.
FIG. 7 illustrates some aspects of a configuration database in accordance with some embodiments.
FIG. 8 illustrates an operational flow/algorithmic structure in accordance with some embodiments.
FIG. 9 illustrates an operational flow/algorithmic structure in accordance with some embodiments.
FIG. 10 illustrates an operational flow/algorithmic structure in accordance with some embodiments.
FIG. 11 illustrates an operational flow/algorithmic structure in accordance with some embodiments.
FIG. 12 illustrates an operational flow/algorithmic structure in accordance with some embodiments.
FIG. 13 illustrates an operational flow/algorithmic structure in accordance with some embodiments.
FIG. 14 illustrates a user equipment in accordance with some embodiments.
FIG. 15 illustrates a network node in accordance with some embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth, such as particular structures, architectures, interfaces, and/or techniques, in order to provide a thorough understanding of the various aspects of some embodiments. However, it will be apparent to those skilled in the art having the benefit of the present disclosure that the various aspects of the various aspects may be practiced in other examples that depart from these specific details. In certain instances, descriptions of well-known devices, circuits, and methods are omitted so as not to obscure the description of the various aspects with unnecessary detail. For the purposes of the present document, the phrase "A or B" means (A), (B), or (A and B), and the phrase "based on A" means "based at least in part on A," for example, it could be "based solely on A," or it could be "based in part on A."

The following is a glossary of terms that may be used in this disclosure.

The term "circuitry" as used herein refers to, is part of, or includes hardware components, such as an electronic circuit, a logic circuit, a processor (shared, dedicated, or group), or memory (shared, dedicated, or group), an application specific integrated circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable system-on-a-chip (SoC)), and/or digital signal processors (DSPs), that are configured to provide the described functionality. In some aspects, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these aspects, the combination of hardware elements and program code may be referred to as a particular type of circuitry.

The term "processor circuitry" as used herein refers to, is part of, or includes circuitry capable of sequentially and automatically carrying out a sequence of arithmetic or logical operations; or recording, storing, or transferring digital data. The term "processor circuitry" may refer to an application processor; baseband processor; a central processing unit (CPU); a graphics processing unit; a single-core processor; a dual-core processor; a triple-core processor; a quad-core processor; or any other device capable of executing or otherwise operating computer-executable instructions, such as program code; software modules; or functional processes.

The term "interface circuitry," as used herein, refers to, is part of, or includes circuitry that enables the exchange of information between two or more components or devices. The term "interface circuitry" may refer to one or more hardware interfaces; for example, buses, I/O interfaces, peripheral component interfaces, network interface cards, or the like.

The term "user equipment" or "UE" as used herein refers to a device with radio communication capabilities and may describe a remote user of network resources in a communications network. The term "user equipment" or "UE" may be considered synonymous to and may be referred to as client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device, including a wireless communications interface.

The term "computer system," as used herein, refers to any type of interconnected electronic devices, computer devices, or components thereof. Additionally, the term "computer system" or "system" may refer to various components of a computer that are communicatively coupled with one another. Furthermore, the term "computer system" or "system" may refer to multiple computer devices or multiple computing systems that are communicatively coupled with one another and configured to share computing or networking resources.

The term "resource" as used herein refers to a physical or virtual device, a physical or virtual component within a computing environment, or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, or the like. A "hardware resource" may refer to a computer, storage, or network resource provided by physical hardware element(s). A "virtualized resource" may refer to a computer, storage, or network resource provided by virtualization infrastructure to an application, device, system, etc. The term "network resource" or "communication resource" may refer to resources that are accessible by computer devices/systems via a communications network. The term "system resources" may refer to any kind of shared entities to provide services and may include computing or network resources. System resources may be considered as a set of coherent functions, network data objects, or services accessible through a server where such system resources reside on a single host or multiple hosts and are clearly identifiable.

The term "channel," as used herein, refers to any tangible or intangible transmission medium used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link," as used herein, refers to a connection between two devices for the purpose of transmitting and receiving information.

The terms "instantiate," "instantiation," and the like, as used herein, refer to the creation of an instance. An "instance" also refers to a concrete occurrence of an object, which may occur, for example, during the execution of program code.

The term "connected" may mean that two or more elements at a common communication protocol layer have an established signaling relationship with one another over a communication channel, link, interface, or reference point.

The term "network element," as used herein, refers to physical or virtualized equipment or infrastructure used to provide wired or wireless communication network services. The term "network element" may be considered synonymous with or referred to as a networked computer, networking hardware, network equipment, network node, virtualized network function, or the like.

The term "information element" refers to a structural element containing one or more fields. The term "field" refers to individual contents of an information element or a data element that contains content. An information element may include one or more additional information elements.

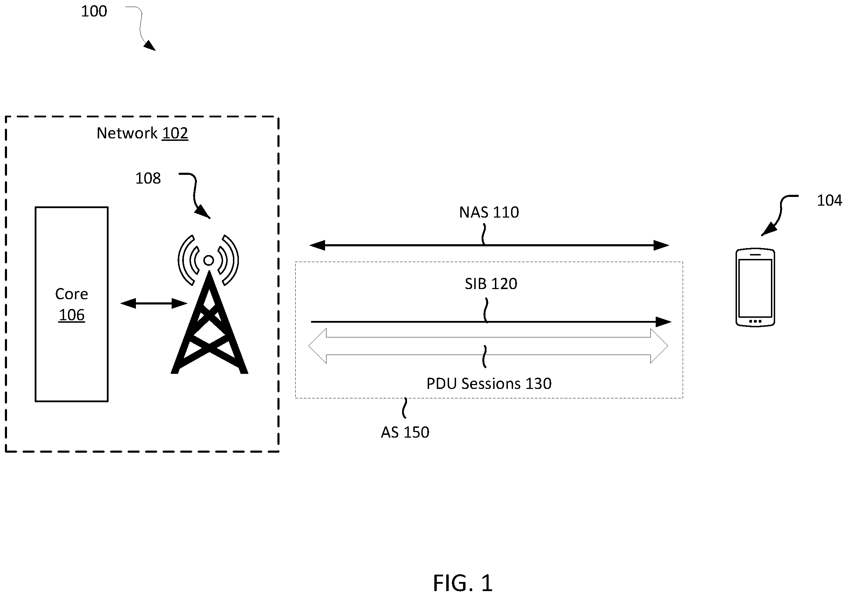

FIG. 1 illustrates a network environment 100 in accordance with some embodiments. The network environment 100 may include a UE 104 coupled with a base station (BS) 108 of a radio access network (RAN). In some embodiments, the BS 108 is a next-generation node B (gNB) that provides one or more 3GPP New Radio (NR) cells. In other embodiments, the BS 108 is an evolved node B (eNB) that provides one or more Long Term Evolution (LTE) cells. The air interface over which the UE 104 and the BS 108 communicate may be compatible with 3GPP technical specifications (TSs), such as those that define Fifth Generation (5G) NR or later system standards (e.g., Sixth Generation (6G) standards).

Network 102, e.g., the system that provides the service to the UE 104, may include a core 106 and the BS 108. The network 102 may allocate resources to the UE 104. The resources may be allocated to the UE 104 as a network slice (or simply, "slice"). A slice may be a logical network created from the shared physical network infrastructure. A slice may span across different network domains such as access, transport, and core and may be isolated from other slices to ensure security and performance. A slice may provide customized service to a specific application user group, such as enhanced mobile broadband (eMBB), ultra-reliable low-latency communication (URLLC), or massive machine-type communication (mMTC).

The resources in a slice may be network elements and functions allocated to the slice to deliver a service to the UE 104. The resources may include portions of the radio spectrum, the BS 108, routers, switches, servers, virtual machines, containers, software-defined networks, and network functions. The resources can be dynamically adjusted according to the demand and availability of the slice.

The resources in a slice may be defined by the network operator or the service provider based on the requirements and specifications of the slice. The requirements and specifications may include QoS parameters, such as latency, reliability, throughput, availability, or the service level agreement (SLA).

The network 102 may configure the UE 104 with one or more slices supported by the network 102. The network 102 may also configure the UE 104 with a set of QoS parameters that may define the QoS for packet data unit (PDU) sessions 130 within a slice. The network 102 may configure the UE 104 with a network slice selection policy (NSSP) that may guide the UE 104 to select a slice based on factors such as location, time, or service type.

The network 102 may allocate a slice to the UE 104 when the UE 104 registers to the network or requests a service that requires a specific slice. The process of allocating a slice to the UE 104 may be initiated by either the UE 104 or the Network 102. The process may be triggered by registration at power-on, mobility, service request, or network reconfiguration.

In some instances, non-access stratum (NAS) signaling 110 may provide the slice configurations to the UE 104. The NAS signaling 110 may include signaling by NAS layers in the network 102 and UE 102. The NAS layers may be responsible for managing the establishment of communication sessions, including dual connectivity, and maintaining continuous communications with the UE 104 as it moves. The NAS signaling 110 signaling may be used to request, negotiate, confirm, modify, or release network resources or slices. The NAS signaling 110 signaling may convey information about the QoS parameters that each slice may need or offer, such as latency, reliability, or throughput. The NAS signaling 110 signaling may be used to report or monitor the status or performance of the network resources or slices.

The NAS signaling 110 may configure one or more network slice access groups (NSAGs). NSAG may allow the UE 104 to access different network slices based on its subscription and service requirements. For example, the UE 104 may receive NSAG information during the registration procedure or when the UE 104 requests a PDU session 130. The access and mobility management function (AMF) of the core 106 may send the UE configuration update command or the registration accept messages, which may include the NSAG information element (IE). The NSAG information may provide a list of NSAGs that the UE can access based on its subscription and service requirements.

In some instances, access stratum (AS) signaling 150 may provide the slice configurations to the UE 104. The AS signaling 150 may be by AS layers at the BS 108 and the UE 104. The AS layers may be responsible for radio resource control (RRC), packet data convergence protocol (PDCP), radio link control (RLC), medium access control (MAC), and physical layer (PHY) aspects. The RRC may be responsible for controlling the configuration and status of the radio resource and the radio bearers between the UE 104 and the network 102. The RRC may manage the mobility, security, and measurement procedures of the LTE.

The RRC may send system information blocks (SIBs) 120 to the UE 104. The SIBs 120 may contain configuration IEs regarding cells or networks. The SIBs 120 are transmitted via AS signaling 150. The BS 108 may transmit the SIBs 120 via broadcast or control channels. For example, the BS 108 may send the SIBs 120 to the UE 104 via the physical broadcast channel (PBCH) or the physical downlink shared channel (PDSCH).

The UE 104 may receive slice configurations from the NAS signaling 110 or the AS signaling 150. The slice configurations received from the NAS signaling 110 or AS signaling 150 may overlap, complement, or contradict one another.

In one embodiment, the UE 104 may implement a slice prioritization based on configuration information provided by SIB4 and SIB16. The UE 104 may develop a slice-priority network configuration database based on SIB4 and SIB16 used for cell re-selection.

In one embodiment, the UE 104 may implement a slice prioritization based on configuration information provided by SIB4, SIB16, and NSAG information provided by NAS. The UE may implement a slice prioritization scheme based on SIB4, SIB16, and NSAG.

In one embodiment, the UE 104 may generate a dynamic slice priority decision table. The dynamic slice priority decision table may include a UE optimization decision for each possible slice combination. The UE optimization decision associated with a slice combination may include steps the UE 104 may take to map a PDU session to a requested slice within the associated slice combination.

For example, in a network supporting two slices a and b, the dynamic slice priority decision table may include UE optimization decisions for supporting slice combinations (a), e.g., application or service request slice a, (b), e.g., application or service request slice b, and (a,b), e.g., application or service request two slices a and b.

It is desired to construct a network slice selection or re-selection procedure, e.g., a slice-priority network configuration based on the AS and NAS configurations. The UE 104 may use the slice-priority network configuration to determine the cell or the frequency to re-select for accessing a particular slice. The UE 104 may use the slice selection or re-selection procedure to determine when or how to initiate a new PDU session or modify an existing PDU session.

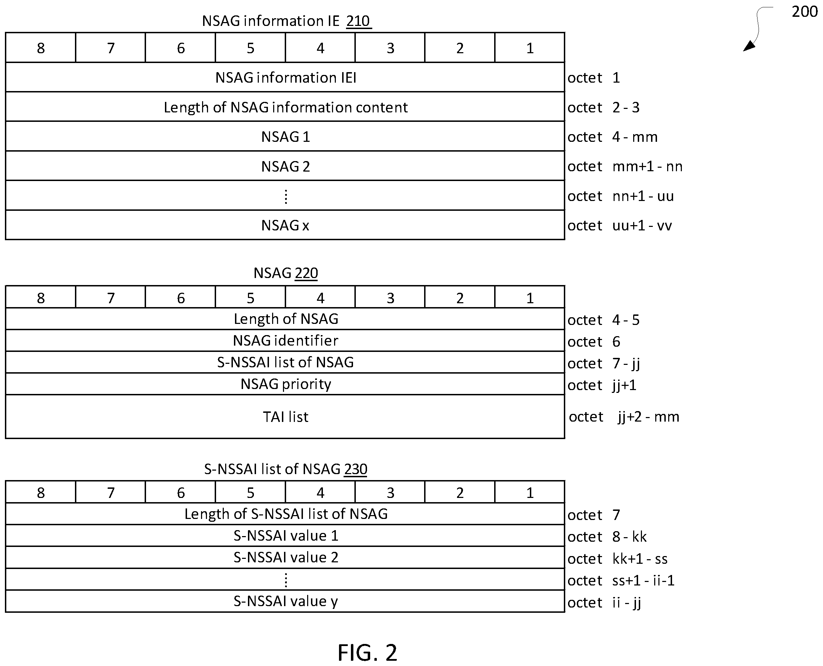

FIG. 2 illustrates some aspects of NSAG 200 in accordance with some embodiments. NSAG is an identifier of a group of associated network slices. In some embodiments, the core network may send a NAS message to configure NSAGs. For example, the UE configuration update command or the registration accept message messages may include the NSAG information IE 210. When registering or requesting a PDU session, the UE may use NSAG information IE 210 to select the appropriate network slice.

The NSAG information IE 210 may include the NSAG IE identifier (IEI). NSAG IEI may be one octet identifying the NSAG IE in a NAS message, e.g., octet 1 of the NSAG information IE 210.

The NSAG information IE 210 may include a field that indicates the length of the IE content. For example, the field "Length of NSAG information content" in the NSAG information IE 210 in octets 2 and 3 may indicate the length of the NSAG information IE 210.

The NSAG information IE 210 may include one or more NSAGs. For example, NSAG 1 in octets 4 to mm, NSAG 2 in octets mm+1 to nn, and NSAG x in octets uu+1 to vv.

The NSAG 220 is an example of each NSAG part of the NSAG information IE 210. The NSAG 220 may include a field that indicates the length of the NSAG. For instance, when NSAG 220 represents the NSAG 1 of NSAG information IE 210, the element "Length of NSAG" in octets 4 and 5 may represent the length of the NSAG 1.

The NSAG 220 may include an NSAG identifier, e.g., the NSAG identifier associated with the NSAG 1 of NSAG information IE 210 is in octet 6. NSAG identifier is a value that identifies a specific NSAG element within the NSAG information IE. For example, when NSAG 220 represents NSAG 1, octet 6 of NSAG information IE 210 may contain the NSAG identifier of NSAG 220.

The NSAG 220 may include a list of single network slice selection assistance information (S-NSSAI). In one instance, the S-NSSAI is a value that identifies a network slice or a set of network slices associated with NSAG 220 that can be used for a PDU session. For example, when NSAG 220 represents NSAG 1, octets 7 to jj of the NSAG information IE 210 may contain the S-NSSAI list of NSAG of NSAG 220.

The NSAG 220 may include an NSAG priority field. The NSAG priority is a value that may indicate the relative priority of the NSAG among other NSAGs. For example, when the NSAG 220 represents NSAG 1, octet jj+1 of the NSAG information IE 210 may contain the NSAG priority of NSAG 220.

The NSAG 220 may include a tracking area identity (TAI) list. The NSAG 220 TAI list may be a subset of the UE's configured TAI list. The network may assign a TAI list to a UE. Each TAI may identify a tracking area (TA), a geographical area where the network can locate a UE without paging. The TAI list of the NSAG 220 may be associated with a subset of the configured TAs. The UE may use the TAI list to decide whether to perform a PDU session modification procedure to change the NSAG for a PDU session when it moves to a different tracking area.

An NSAG association with a group of network slices may be valid in one or more TAs. The TAI list may identify the TAs in which NSAG's association with the network slices identified by the S-NSSAI list is valid.

The S-NSSAI list of NSAG 230 is an example of the S-NSSAI list of NSAG of NSAG 220. A field, e.g., the length of the S-NSSAI list of NSAG, may determine the size of the S-NSSAI list of NSAG 230. For example, when the S-NSSAI list of NSAG 230 represents the S-NSSAI list of NSAG of NSAG 1, octet 7 of the NSAG information IE 210 contains the length of the S-NSSAI list of NSAG.

The S-NSSAI list of NSAG 230 may include one or more S-NSSAI, e.g., S-NSSAI value 1 to y. The S-NSSAI is used to indicate the network slices that are available for the UE in the specified NSAG.

In some instances, an S-NSSAI may be associated with at most one NSAG for Random Access or at most one NSAG for cell re-selection with a TA. An S-NSSAI may be associated with different NSAGs in different TAs.

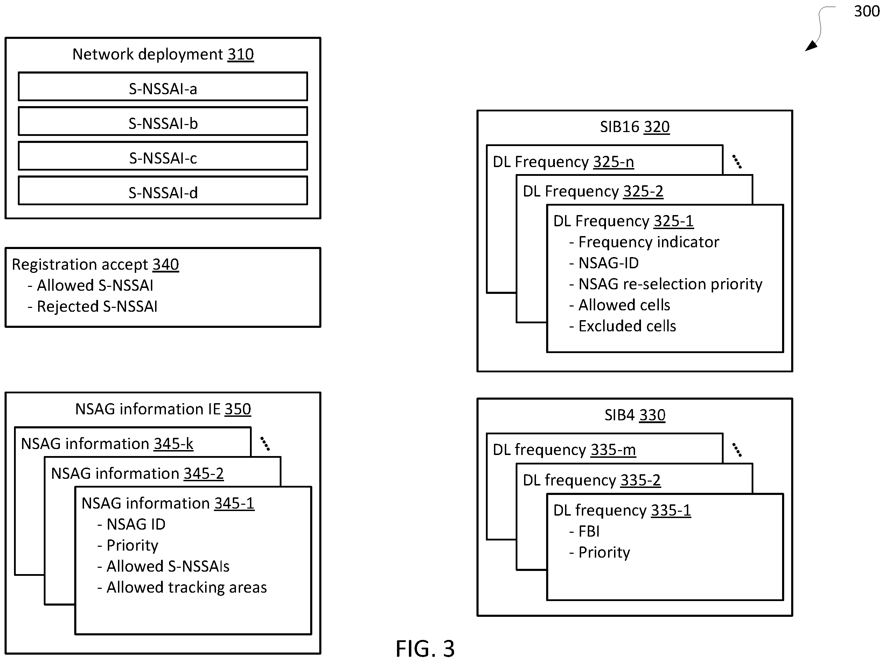

FIG. 3 illustrates some aspects of slice prioritization 300 in accordance with some embodiments. The slice prioritization 300 includes an example of slice configuration information the UE may receive. The slice prioritization 300 may include a network deployment example in which the network deployment 310 includes available S-NSSAI. The UE is provided with NAS slice configurations NSAG 345-1 to 345-k in NSAG information IE 350 and AS slice configurations in SIB16 320 and SIB4 330. The NSAG information IE 350 may be provided by NAS signaling. The SIB16 320 and SIB4 330 may be provided by AS signaling.

During the registration process, the UE may send a registration request message. The registration request may include information related to PDU sessions or slices. The registration request message may include the requested NSSAIs, which may be a list of S-NSSAIs that the UE requests to use. The registration request message may include the status of the PDU session indicating whether the PDU sessions are active or pending in the LTE. The registration request message may include a list of PDU sessions to be activated, which includes a list of PDU session identifiers (IDs) and corresponding S-NSSAIs that the UE requests to activate.

For example, the UE may send the NAS *Registration Request* message to the AMF, which may contain the subscription concealed identifier (SUCI) and the network slice selection assistance information (NSSAI). The AMF may verify the UE's identity and subscription and, assign a globally unique temporary identifier (GUTI) and Allowed NSSAI to the UE.

The AMF may also send slice configuration information to the LTE. For example, the AMF may send the NAS UE *Configuration Update Command* message *Registration Accept* message. The NAS UE *Configuration Update Command* message may include NSAG information IE 350, which may contain NSAG information 345-1 to 345-k. The NSAG information IE 350 may be an example of NSAG information IE 210 in Fig. 2. The registration process is completed when the UE receives a registration accept message from the AMF. For example, the UE may receive a NAS *Registration Accept* message from the AMF.

In one instance, the network may support the configured slices in network deployment 310. For example, network deployment 310 may include S-NSSAI-a, b, c, and d. In one example, S-NSSAI-a may be associated with an eMBB slice, S-NSSAI-b may be associated with a URLLC slice, e.g., a slice supporting URLLS QoS requirements, S-NSSAI-c may be associated with a proprietary slice, and S-NSSAI-d may be associated with a gaming slice. The network may also configure several NSAGs based on network deployment 310.

The NAS signaling may provide NSAG information IE 350 to the UE. The NSAG information IE 350 may include NSAG information 345-1 to k. Each NSAG information, e.g., NSAG information 345-1, may include an NSAG ID, a priority, allowed S-NSSAIs, or allowed tracking areas. The allowed S-NSSAIs include the slices or S-NSSAIs associated with the NSAG. Allowed tracking areas may indicate the tracking areas in which the associated S-NSSAIs are allowed.

As mentioned above, the UE may send a registration request. In the registration request message, the UE may request one or more S-NSSAIs or PDUs associated with one or more S-NSSAIs. At the completion of the registration process, the network may send a NAS registration accept 340 message to the UE. The registration accept 340 message may include a list of allowed S-NSSAIs or a list of rejected S-NSSAIs. The rejected NSSAI information element may indicate the S-NSSAIs that the UE requested in the registration request message and that the network has rejected them. The network may reject none, some, or all of the requested S-NSSAIs. The UE may use the rejected NSSAI or allowed NSSAI IEs to update its allowed NSSAI. The UE may use the rejected NSSAI IE to decide whether to perform a network slice selection assistance procedure to request a different set of S-NSSAIs from the network.

SIB4 330 may be used for inter-frequency re-selection. SIB4 330 may contain a list of DL frequencies 335-1 to 335-m, generally may identify as DL frequency 335. A DL frequency 335, e.g., DL frequency 335-1, may be associated with a frequency band indicator (FBI) and a cell re-selection priority. The DL frequency 335 may also include a cell re-selection threshold.

After completion of the registration process, the UE is connected to a serving cell. The serving cell may be one of the DL frequency 335. A serving cell may be the cell that provides radio resources to the LTE. For example, a serving cell may be either a primary cell (PCell) or a secondary cell (SCell), depending on whether it serves the primary component carrier (PCC) or the secondary component carrier (SCC) in carrier aggregation.

In some instances, the UE may measure the reference signal received power (RSRP) or reference signal received quality (RSRQ) of the serving cell and compare it with a condition. If the serving cell measurement does not fulfill the condition, the UE may perform inter-frequency measurements on the frequencies indicated by SIB4 330 and select a suitable cell with a higher priority or a better quality.

In some instances, the UE may receive SIB4 330 via RRC signaling. The SIB4 330 may include an *interFreqCarrierFreqList,* which may include a list of target frequencies for inter-frequency cell re-selection. The *interFreqCarrierFreqList* may include *interFrqCarrierFreqInfo* IE that may contain IEs for each target frequency for inter-frequency cell re-selection. For example, *interFreqCarrierFreqInfo* may include a *dl-CarrierFreq* that may indicate the target frequency for inter-frequency cell re-selection. The *dl-CarrierFreq* may be expressed as an absolute radio frequency channel number (ARFCN) value for the NR band. It may indicate the center frequency of resource block 0 of the downlink component carrier. The *dl-CarrierFreq* may be associated with a *cellReselectionPriority* IE that indicates the cell re-selection priority associated with the *dl-CarrierFreq.*

SIB16 320 may be used for slice-based inter-frequency re-selection. SIB16 320 may contain a list of downlink (DL) frequencies 325-1 to 325-n, generally referred to as DL frequency 325. A DL frequency 325, e.g., DL frequency 325-1, may include a frequency indicator, an NSAG-ID, an NSAG re-selection priority, a list of allowed cells, or a list of excluded cells. DL frequency 325 associates the frequency band, identified by the frequency indicator, with an NSAG, identified by the NSAG-ID. The UE may use the NSAG re-selection priority as the priority of the frequency for re-selecting a cell that belongs to an NSAG.

In some instances, the DL frequency 325-1 of SIB16 320 may be associated with the serving cell or serving frequency. The other DL frequencies in SIB16 320 may be mapped to neighboring frequencies 335 in SIB4 330. In one instance, DL frequency 325-2 of SIB16 320 may be mapped to neighboring frequency 335-1 and the next DL frequency of SIB16 320 to the next neighboring frequency in SIB4 330.

For example, SIB16 320 received via RRC signaling may include a *freqPriorityListSlicing* information element. The *freqPriorityListSlicing* may include a *dl-ImplicitCarrierFreq* IE associated with slices in *sliceInfoList* IE of *sliceInfo* IE. The *sliceInfoList* IE may include a *nsag-IdentityInfo, nsag-CellReselectionPriority, sliceAllowedCellListNR,* or *sliceExcludedCellListNR.* The *dl ImplicitCarrierFreq* may indicate the DL carrier frequency to which slices in *sliceInfoList* are associated. The frequency may be signaled implicitly; value 0 may correspond to the serving frequency, value 1 may correspond to the first frequency indicated by the *InterFreqCarrierFreqList* in SIB4 330, and so on. The *sliceAllowedCellListNR* may include a list of allowed cells for slicing. The cells listed may support the corresponding NSAG-frequency pair, and those not listed do not support the corresponding NSAG-frequency pair.

Similarly, *sliceExcludedCellListNR* may include a list of excluded cells for slicing. The cells listed do not support the corresponding NSAG-frequency pair, and those not listed may support the corresponding NSAG-frequency pair. The *sliceInfo* may include a *sliceCellListNR* IE that may contain either the list of allowed or excluded cells for slicing. If absent, it may imply all the cells support the corresponding NSAG-frequency pair.

The UE may receive redundant information in SIB4 330, SIB16 320, and NSAG information IE 350. When UE invokes an application or service that requires a specific slice, the UE may need to implement a policy or criteria to decide the physical cell identity (PCI) or frequency to re-select for accessing that particular slice. The implementation may also provide the UE criteria by which the UE may determine whether to initiate a new PDU session for the invoked application or services based on the AS and NAS configurations provided by SIB4, SIB16, or NAS registration accept or UE configuration update command message.

In some instances, the UE may receive NSAG information IE 350 via NAS signaling. The NSAG information IE 350 may provide NSAG information 345-1 in which NSAG ID is associated with a priority. The UE may also receive the cell-level configuration SIB16 320 that may include DL frequency 325-1, which associates an NSAG-ID with an NSAG-re-selection priority. If the NSAG ID of NSAG information 345-1 is the same as the NSAG-ID of the DL frequency 325-1, the UE may choose the NSAG priority provided by NAS signaling, e.g., priority IE in NSAG information 345-1, for this NSAG.

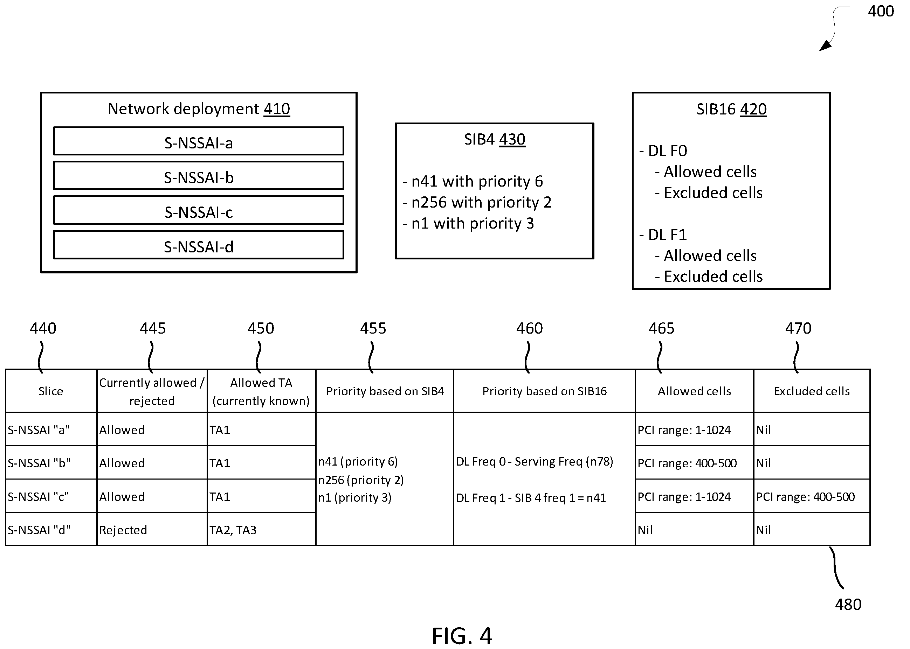

FIG. 4 illustrates some aspects of slice prioritization 400 in accordance with some embodiments. In particular, slice prioritization 400 is an example of slice prioritization implementation based on broadcast information in SIB4 430 and SIB16 410.

In this example, it is assumed that the network has deployed four S-NSSAIs, e.g., S-NSSAI-a, S-NSSAI-b, S-NSSAI-c, and S-NSSAI-d of the network deployment 410. The S-NSSAI-a may be the default eMBB slice, S-NSSAI-b may be a URLLC slice, S-NSSAI-c may be a proprietary slice, and S-NSSAI-d may be a gaming slice. In some instances, an eMBB slice is a default slice and is allowed in all frequencies and TAs. A default PDU session may be associated with the eMBB slice.

Further, it is assumed that there are three tracking areas (TAs), e.g., TA1, TA2, and TA3. The UE powers up in TA1 and sends a NAS Registration Request message. In the Registration Request message, the UE requests NSSAI for 4 slices a, b, c, and d, e.g., S-NSSAIs a-d. The UE receives the list of allowed and rejected NSSAIs in the NAS Registration Accept message. The UE receives the Allowed NSSAI indicating that S-NSSAIs a, b, and c are allowed, and the Rejected NSSAI indicating that S-NSSAI d is rejected in TA1 but allowed in TA2 and TA3. In some instances, if the allowed NSSAI is not associated with a list of TAs, the UE may assume that the allowed NSSAI is allowed in the current TA in which the UE is registered.

The UE receives SIB4 430 configuring three frequencies: the n41 frequency band with priority 6, the n256 frequency band with priority 2, and the n1 frequency band with priority 3.

The UE receives SIB16 420. The SIB16 420 message includes two DL frequencies, DL F0, the serving frequency of the n78 frequency band, and DL F1, the SIB4 frequency 1, e.g., the n41 frequency band.

The UE may create a configuration database based on the information received from the complete NAS registration message and AS RRC SIB4 430 and SIB16 420 messages.

The slice-priority network configuration database 480 is an example of a slice-priority network configuration database. Column 440 includes the deployed S-NSSAIs a-d. Column 440 is obtained from the requested NSSAI from Registration Request. Column 445 indicates whether the corresponding slice is allowed or rejected. Column 450 lists the TAs in which the corresponding slice is allowed. The UE receives the information in columns 445 and 450 from the NAS signaling, e.g., Registration Accept or UE Configuration Update Command. Column 455 includes the frequency re-selection priority based on SIB4 430. These priorities may not be associated with slices in column 440. Column 460 includes frequency re-selection priorities based on SIB16 420. Column 465 includes the cells in which an S-NSSAI is allowed.

Similarly, column 470 includes the cells in which an S-NSSAI is excluded. Columns 465 and 470 are obtained from the allowed cells and excluded cells associated with the DL F0, serving cell, in SIB16 420. Each row contains the information associated with the S-NSSAI in that row.

The following scenarios describe how the UE may utilize the slice-priority network configuration database 480. The following scenarios are examples of dynamic slice priority decision table entries.

In scenario 1, the UE invokes applications or services that require S-NSSAI-a and S-NSSAI-b. The S-NSSAI-a is the default eMBB slice with no restriction and is allowed in all TAs and PCIs.

For the application or service requesting S-NSSAI-b, the UE uses the information in the slice-priority network configuration database 480 associated with S-NSSAI-b, e.g., the third row of the slice-priority network configuration database 480. Column 445 indicates that the UE is allowed to use S-NSSAI-b. Column 450 indicates that S-NSSAI is allowed in the current TA, TA1.

The UE may check whether any current and active PDU sessions are mapped to S-NSSAI-b. If an active PDU session currently exists, the UE may decide whether there is a need to modify the PDU session or create a new PDU session. If an active PDU session does not exist, the UE may create a new PDU session associated with S-NSSAI-b.

Suppose the UE decides to create a new PDU session using the slice-priority network configuration database 480. In that case, the UE may check if the current serving PCI is within the range indicated by column 465, e.g., between 400-500. If the current serving PCI is within the range, e.g., between 400-500, the UE may initiate a new PDU session. However, if the current serving PCI is not within the range indicated by column 465, the UE may check the neighboring cells.

If the PCI range is not between 400-500, the UE may check neighbor cell measurements if any neighboring cells are present in the same TA, TA1. If any PCIs in the range are present in TA1, the UE may re-select to that PCI under n78 frequency (n78 is the serving frequency associated with the DL frequency F0 in SIB16 420). The UE searches for a cell in frequencies under n78 for re-selection. Suppose UE could not find any cell re-selection candidate under n78, based on column 460 and priority configuration based on SIB16 420, the UE searches for a candidate under DL frequency F1. DL frequency F1 is associated with the first frequency band in SIB4 430. Therefore, the UE will search for candidate cells under the n41 frequency band for re-selection. UE may not search for other frequency bands not included in SIB16 420.

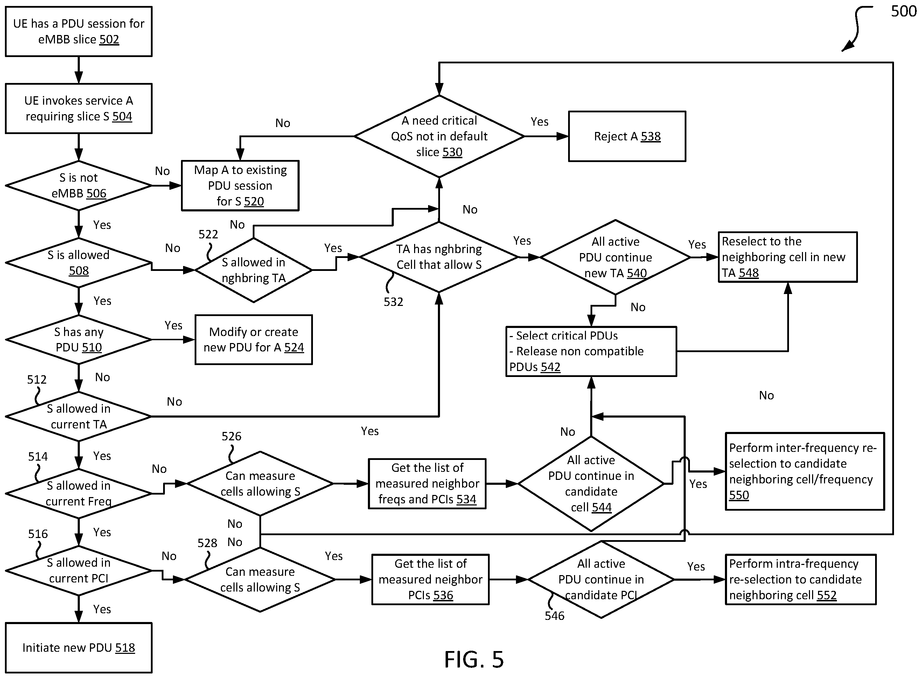

If the UE successfully re-selects a cell that supports S-NSSAI-b, the UE may establish a new PDU session mapped to S-NSSAI-b and possibly re-establish a PDU session mapped to S-NSSAI-a. If the UE cannot find a cell that supports S-NSSAI-b, and the current serving cell does not support S-NSSAI-b, S-NSSAI-b may not be supported. To support the invoked application or service, the UE may perform additional procedures, e.g., procedures provided in FIG. 5 and its description.

In scenario 2, the UE invokes applications or services that require S-NSSAI-a and S-NSSAI-c. The S-NSSAI-a is the default eMBB slice with no restriction and is allowed in all TAs and PCIs.

For the application or service requesting S-NSSAI-c, the UE uses the information in the slice-priority network configuration database 480 associated with S-NSSAI-c, e.g., the fourth row of the slice-priority network configuration database 480. Column 445 indicates that the UE is allowed to use S-NSSAI-c. Column 450 indicates that S-NSSAI is allowed in the current TA, TA1.

The UE may check whether any current and active PDU sessions are mapped to S-NSSAI-c. If an active PDU session currently exists, the UE may decide whether there is a need to modify the PDU session or create a new PDU session. If an active PDU session does not exist, the UE may create a new PDU session associated with S-NSSAI-c.

Suppose the UE decides to create a new PDU session using the slice-priority network configuration database 480. In that case, the UE may check if the current serving PCI (e.g., PCI of the current serving cell) is within the range indicated by column 465, e.g., between 1-1024, and within the range indicated by excluded cells in column 470, e.g., between 400-500. If the current serving PCI is within the range, e.g., not between 400-500, the UE may initiate a new PDU session. However, if the current serving PCI is not within the range indicated by columns 465 and 470, the UE may check the neighboring cells.

If the PCI range is between 400-500, the UE may check neighbor cell measurements if any neighboring cells are present in the same TA, TA1. If any PCIs in the range are present in TA1, the UE may re-select to that PCI under n78 frequency (n78 is the serving frequency associated with the DL frequency F0 in SIB16 420). The UE searches for a cell in frequencies under n78 for re-selection. Suppose UE could not find any cell re-selection candidate under n78, based on column 460 and priority configuration based on SIB16 420, the UE searches for a candidate under DL frequency F1. DL frequency F1 is associated with the first frequency band in SIB4 430. Therefore, the UE will search for candidate cells under the n41 frequency band for re-selection. UE may not search for other frequency bands not included in SIB16 420.

If the UE successfully re-selects a cell that supports S-NSSAI-c, the UE may establish a new PDU session mapped to S-NSSAI-c and possibly re-establish a PDU session mapped to S-NSSAI-a. If the UE cannot find a cell that supports S-NSSAI-c, and the current serving cell does not support S-NSSAI-c, S-NSSAI-c may not be supported. To support the invoked application or service, the UE may perform additional procedures, e.g., procedures provided in FIG. 5 and its description.

In scenario 3, the UE invokes applications or services that require S-NSSAI-a, S-NSSAI-b and S-NSSAI-c. The S-NSSAI-a is the default eMBB slice with no restriction and is allowed in all TAs and PCIs.

For S-NSSAI-b, column 465 of the slice-priority network configuration database 480 indicates that the allowed PCI range in the current serving cell must be in the range of 400-500. Column 470 of the slice-priority network configuration database 480 also indicates that the PCI of the cell providing S-NSSAI-c cannot be in the range of 400-500. Therefore, S-NSSAI-b and S-NSSAI-c in the current serving frequency are mutually exclusive. Based on the current network configuration in the slice-priority network configuration database 480, S-NSSAI-b and S-NSSAI-c cannot operate at the same time even though they are part of Allowed NSSAI.

UE may make a decision and identify a more critical slice. For example, the UE may identify a critical slice based on the applications running in the foreground or background or whether the screen is ON or OFF. For example, the UE may determine that the S-NSSAI-b is more critical. The UE may find a cell that supports S-NSSAI-a and S-NSSAI-b and a different cell that supports S-NSSAI-a and S-NSSAI-c. The UE may switch between these two cells. In another instance, the UE may drop the less critical slice and finds a cell that supports the more critical slice.

In scenario 4, the UE invokes applications or services that require S-NSSAI-d. The slice-priority network configuration database 480 in column 445 indicates that slice d is rejected in the current TA, TA1, but it is allowed in TA2 and TA3.

The UE may measure neighbor cells in TA2 to identify a potential candidate PCI. The UE may check if any current PDU sessions could continue in the PCI in TA2. The UE may re-select to a PCI under n78 frequency, followed by n41 in TA2 or TA3. UE will not prefer any other frequency or band not included in SIB16 420.

As part of the re-selection process, the UE may send a NAS Registration Request (mobility) message with S-NSSAI-d included in the Requested NSSAI IE. The UE may update the slice-priority network configuration database 480 based on the Allowed and Rejected IEs in the Registration Accept message.

FIG. 5 illustrates an operational flow/algorithmic structure 500 in accordance with some embodiments. The operation flow/algorithmic structure 500 may be implemented by an entity in a UE (for example, UE 104 or UE 1400) or components therein, for example, processing circuitry 1404. The UE has completed the registration and is currently camping on a serving cell of a frequency band in a TA. The UE has received NAS and AS configurations related to slices and cell re-selection priorities, and UE has developed the slice-priority network configuration database.

The operation flow/algorithmic structure 500 may include, at 502, establishing a default PDU session mapped to the default eMBB slice. The default PDU session may always be active.

The operation flow/algorithmic structure 500 may include, at 504, invoking a service or application, *A,* that requires slice, *S.*

The operation flow/algorithmic structure 500 may include, at 506, determining whether the invoked service or application *A* requires a slice S other than the default eMBB slice. The UE may make this determination based on the UE route-selection policy (URSP) rules. URSP rules allow the UE to select the best route for its data traffic based on rules configured by the network or the application server. Based on the determination that the invoked service or application requires a slice other than the default eMBB, the operation flow/algorithmic structure 500 proceeds to step 508 following the "Yes" branch. Based on the determination that the invoked service or application does not require a slice other than the default eMBB, the operation flow/algorithmic structure 500 proceeds to step 520 following the "No" branch.

The operation flow/algorithmic structure 500 may include, at 508, determining whether slice S is allowed or rejected. The UE may send a list of slices in the registration request message, and the network may send a list of allowed or rejected slices to the UE in the registration accept message. The UE determines whether slice S is in the list of allowed or rejected slices. Based on the determination that slice S is allowed, the operation flow/algorithmic structure 500 proceeds to step 510 following the "Yes" branch. Based on the determination that the slice *S* is not allowed, e.g., *S* is in the list of rejected slices, the operation flow/algorithmic structure 500 proceeds to step 522 following the "No" branch.

The operation flow/algorithmic structure 500 may include, at 510, determining whether there is an active PDU session mapped to slice S. Based on the determination that there is an active PDU session mapped to slice S, the operation flow/algorithmic structure 500 proceeds to step 524 following the "Yes" branch. Based on the determination that no active PDU session is mapped to slice S, the operation flow/algorithmic structure 500 proceeds to step 512 following the "No" branch.

The operation flow/algorithmic structure 500 may include, at 512, determining whether slice S is allowed in the current TA. Based on the slice-priority network configuration database, the UE may determine whether slice S is allowed in the current TA. Based on the determination that slice S is allowed in the current TA, the operation flow/algorithmic structure 500 proceeds to step 514 following the "Yes" branch. Based on the determination that slice S is not allowed in the current TA, the operation flow/algorithmic structure 500 proceeds to step 532 following the "No" branch.

The operation flow/algorithmic structure 500 may include, at 514, determining whether slice S is allowed in the current frequency or band. Based on the slice-priority network configuration database, the UE may determine whether slice S is allowed in the current frequency or band. Based on the determination that slice S is allowed in the current frequency or band, the operation flow/algorithmic structure 500 proceeds to step 516 following the "Yes" branch. Based on the determination that slice S is not allowed in the current frequency or band, the operation flow/algorithmic structure 500 proceeds to step 526 following the "No" branch.

The operation flow/algorithmic structure 500 may include, at 516, determining whether slice S is allowed in the current PCI. Based on the slice-priority network configuration database, the UE may determine whether slice S is allowed in the current PCI. Based on the determination that slice S is allowed in the current PCI, the operation flow/algorithmic structure 500 proceeds to step 518 following the "Yes" branch. Based on the determination that slice S is not allowed in the current PCI, the operation flow/algorithmic structure 500 proceeds to step 528 following the "No" branch.

The operation flow/algorithmic structure 500 may include, at 518, initiating a new PDU session for slice S. The UE may use the session establishment request procedure to establish a new PDU session mapped to slice S.

The operation flow/algorithmic structure 500 may include, at 520, mapping the data traffic of the invoked application or service *A* to the existing PDU session mapped to slice *S.*

The operation flow/algorithmic structure 500 may include, at 522, determining whether slice S is allowed in a neighboring TA. Based on the slice-priority network configuration database, the UE may determine whether slice S is allowed in the neighboring TA. Based on the determination that slice S is allowed in the neighboring TA, the operation flow/algorithmic structure 500 proceeds to step 532 following the "Yes" branch. Based on the determination that slice S is not allowed in the neighboring TA, the operation flow/algorithmic structure 500 proceeds to step 530 following the "No" branch.

The operation flow/algorithmic structure 500 may include, at 524, determining whether to modify the existing PDU session mapped to slice S or create a new PDU session for the data traffic associated with the invoked application or service, A. The UE may determine to modify the existing PDU session if the network supports slice-AMBR (AMBR stands for aggregated maximum bit rate) for slice S. The UE may modify the existing PDU session if the invoked application or service, A, requires only non-GBR (GBR stands for guaranteed bit rate) quality of service (QoS). The UE may create a new PDU session if the current PDU session does not support Reflective QoS, while the requested application or service, A, needs Reflective QoS. In Reflective QoS, the UE may derive the QoS rules for the uplink (UL) based on the DL traffic. In Reflective QoS, the UE may dynamically change the mapping of UL data traffic among several QoS flows within the same PDU session by changing the header without modifying the PDU session.

In some instances, one or more QoS flows may be mapped to one PDU session. When UE determines to modify the existing PDU session mapped to slice S, the UE may initiate mapping a new QoS flow associated with the data traffic of the invoked application or service, A, to the existing PDU session of slice S.

The operation flow/algorithmic structure 500 may include, at 526, determining whether the UE is able to measure cells in neighboring frequencies on which the slice S is supported. The UE may determine whether slice S is allowed in the neighboring frequencies on which the slice S is supported based on the slice-priority network configuration database. Based on the determination that the UE is able to measure cells in neighboring frequencies on which the slice S is supported, the operation flow/algorithmic structure 500 proceeds to step 534 following the "Yes" branch. Based on the determination that the UE cannot measure cells in neighboring frequencies on which the slice S is supported, the operation flow/algorithmic structure 500 proceeds to step 530 following the "No" branch.

The operation flow/algorithmic structure 500 may include, at 528, determining whether the UE is able to measure neighbor cells in the same frequency, not in the excluded range on which the slice *S* is supported. The UE may determine whether slice *S* is allowed in the neighboring cells in the same frequency, not in the excluded range on which slice S is supported based on the slice-priority network configuration database. Based on the determination that the UE is able to measure neighbor cells in the same frequency, not in the excluded range on which the slice S is supported, the operation flow/algorithmic structure 500 proceeds to step 536 following the "Yes" branch. Based on the determination that the UE cannot measure neighbor cells in the same frequency, not in the excluded range on which the slice S is supported, the operation flow/algorithmic structure 500 proceeds to step 530 following the "No" branch.

The operation flow/algorithmic structure 500 may include, at 530, determining whether the invoked application or service, A, requires any critical QoS not supported by the default slice. Based on the determination that the invoked application or service, A, requires critical QoS, which are not supported by the default slice, the operation flow/algorithmic structure 500 proceeds to step 538 following the "Yes" branch. Based on the determination that the invoked application or service, A, does not require any critical QoS not supported by the default slice, the operation flow/algorithmic structure 500 proceeds to step 520 following the "No" branch.

The operation flow/algorithmic structure 500 may include, at 532, determining whether the current TA has any neighboring cell where slice S is allowed. The UE may determine whether the current TA has any neighboring cell where slice S is allowed based on the slice-priority network configuration database. Based on the determination that the current TA has a neighboring cell where slice S is allowed, the operation flow/algorithmic structure 500 proceeds to step 540 following the "Yes" branch. Based on the determination that the current TA does not have any neighboring cell where slice S is allowed, the operation flow/algorithmic structure 500 proceeds to step 530 following the "No" branch.

The operation flow/algorithmic structure 500 may include, at 534, obtaining or determining the list of measured neighbor frequencies and PCIs. The operation flow/algorithmic structure 500 proceeds to step 544.

The operation flow/algorithmic structure 500 may include, at 536, obtaining or determining the list of measured neighbor PCIs. The operation flow/algorithmic structure 500 proceeds to step 546.

The operation flow/algorithmic structure 500 may include, at 538, rejecting the invoked application or serviced. The UE may provide an appropriate indication, e.g., a pop-up message, to the end user.

The operation flow/algorithmic structure 500 may include, at 540, determining whether all of the active PDU sessions mapped to other slices could continue in the new TA. The UE may determine whether all active PDU sessions mapped to other slices could continue in the new TA based on the slice-priority network configuration database. Based on the determination that all active PDU sessions mapped to other slices could continue in the new TA, the operation flow/algorithmic structure 500 proceeds to step 548 following the "Yes" branch. Based on the determination that all active PDU sessions mapped to other slices could not continue in the new TA, the operation flow/algorithmic structure 500 proceeds to step 542 following the "No" branch.

The operation flow/algorithmic structure 500 may include, at 542, determining current PDU sessions or slices that are critical compared to the user-requested new slice S. The UE may use slice-priority based on usage or impact to determine current PDU sessions or slices that are critical compared to the user requested new slice S. The UE may map the non-critical or low-impact PDU sessions to the default slice, e.g., eMBB slice, which may be supported in all cells, PCIs, frequencies, bands, or TAs. The following examples describe aspects of the slice-priority based on usage or impact.

For example, PDU sessions that are dormant or have minimal usage may be assigned a low priority. Slices or PDU sessions that could be mapped to the default slice, e.g., eMBB slice, may be considered low-impact and assigned low priorities. The UE may use a PDU release timer to track completed applications or services, but the associated PDU session is still active. The UE may mark these PDU sessions or slices as low priority. The UE may use the assigned priorities to determine whether current PDU sessions or slices are critical compared to the user-requested slice S. The UE may map the non-critical, low priority, or low-impact PDU sessions to the default slice, e.g., eMBB slice, which may be supported in all cells, PCIs, frequencies, bands, or TAs.

The operation flow/algorithmic structure 500 may include, at 544, determining whether all the active PDU sessions mapped to other slices could continue in any of the frequencies or PCIs from the list of measured neighbor frequencies and PCIs. The UE may determine whether all the active PDU sessions mapped to other slices could continue in any of the frequencies or PCIs from the list of measured neighbor frequencies and PCIs based on the slice-priority network configuration database. Based on the determination that all the active PDU sessions mapped to other slices could continue in a frequency or PCI from the list of measured neighbor frequencies and PCIs, the operation flow/algorithmic structure 500 proceeds to step 550 following the "Yes" branch. Based on the determination that all the active PDU sessions mapped to other slices could not continue in any of the frequencies or PCIs from the list of measured neighbor frequencies and PCIs, the operation flow/algorithmic structure 500 proceeds to step 542 following the "No" branch.

The operation flow/algorithmic structure 500 may include, at 546, determining whether all the active PDU sessions mapped to other slices could continue in any of the PCIs from the list of measured PCIs. The UE may determine whether all the active PDU sessions mapped to other slices could continue in any of the PCIs from the list of measured PCIs based on the slice-priority network configuration database. Based on the determination that all the active PDU sessions mapped to other slices could continue in a PCI from the list of measured PCIs, the operation flow/algorithmic structure 500 proceeds to step 552 following the "Yes" branch. Based on the determination that all the active PDU sessions mapped to other slices could not continue in any of the PCIs from the list of measured PCIs, the operation flow/algorithmic structure 500 proceeds to step 542 following the "No" branch.

The operation flow/algorithmic structure 500 may include, at 548, re-selecting to the neighboring cell in the new TA. The UE may send a registration request, including a type IE that indicates mobility update and a requested NSSAI IE, adding the slices from previously rejected NSSAI to the existing allowed NSSAI list. Based on the Allowed NSSAI in registration accept message, the UE may populate or update the slice-priority network configuration database or dynamic slice-priority decision table. The UE may initiate establishing a new PDU session for the new slice S via the PDU session establishment request procedure.

The operation flow/algorithmic structure 500 may include, at 550, performing inter-frequency re-selection to the candidate neighboring cell or frequency. The UE may re-establish the active or existing PDU sessions in the new cell or frequency. The UE may initiate a new PDU session for the new slice S via the PDU session establishment request procedure. The UE may populate or update the slice-priority network configuration database or dynamic slice-priority decision table.

The operation flow/algorithmic structure 500 may include, at 552, performing intra-frequency re-selection to the candidate neighboring cell or frequency. The UE may re-establish the active or existing PDU sessions in the new cell or frequency. The UE may initiate a new PDU session for the new slice S via the PDU session establishment request procedure. The UE may populate or update the slice-priority network configuration database or dynamic slice-priority decision table.

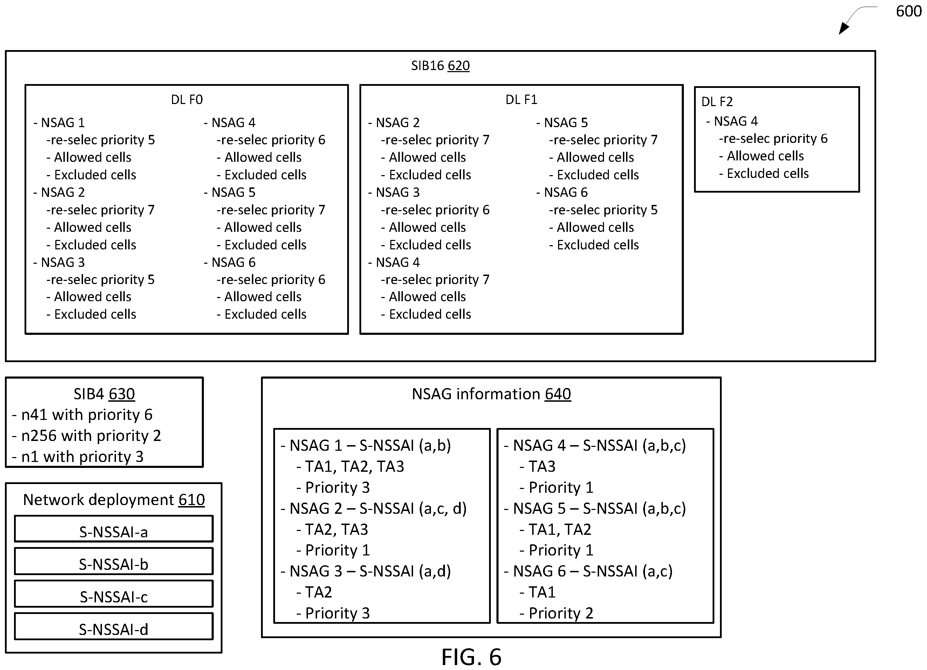

FIG. 6 illustrates some aspects of slice prioritization 600 in accordance with some embodiments. Aspects of the slice prioritization 600 include an example of slice configuration information the UE may receive. The UE may receive information related to network deployment 610, inter-frequency re-selection information in SIB4 630, inter-frequency slice-based re-selection information in SIB16 620, and NSAG information 640. The network deployment 610 and NSAG information 640 may be provided by NAS signaling, and the SIB4 630 and SIB16 620 may be provided by AS RRC signaling.

In this example, it is assumed that the network has deployed four S-NSSAIs, e.g., S-NSSAI-a, S-NSSAI-b, S-NSSAI-c, and S-NSSAI-d of the network deployment 610. The S-NSSAI-a may be the default eMBB slice, S-NSSAI-b may be a URLLC slice, S-NSSAI-c may be a proprietary slice, and S-NSSAI-d may be a gaming slice. In some instances, an eMBB slice is a default slice and is allowed in all frequencies and TAs. A default PDU session may be associated with the eMBB slice.

Further, it is assumed that there are three tracking areas (TAs), e.g., TA1, TA2, and TA3. The UE powers up in TA1 and sends a NAS registration request message. In the registration request message, the UE requests NSSAI for 4 slices a, b, c, and d, e.g., S-NSSAIs a-d. The UE receives the list of allowed and rejected NSSAIs in the NAS registration Accept message. Via NAS signaling, the UE receives the Allowed NSSAI and Rejected NSSAI. The Allowed NSSAI indicates S-NSSAIs a, b, and c are allowed, and the Rejected NSSAI indicates that S-NSSAI d is rejected in TA1 but allowed in TA2 and TA3. In some instances, if the allowed NSSAI is not associated with a list of TAs, the UE may assume that the allowed NSSAI is allowed in the current TA in which the UE is registered.

The UE receives NSAG information 640 via NAS signaling. For example, the UE may receive NSAG information 640 in the registration accept, or UE configuration update command message. The NSAG information 640 configures NSAG 1-6. NSAG 1 includes S-NSSAI-a and b. NSAG 1 is allowed in all tracking areas, TA1-3, and has priority 3. NSAG 2 includes S-NSSAI-a,b, and c. NSAG 2 is allowed in tracking areas TA2 and TA3 and has priority 1. NSAG 3 includes S-NSSAI-a and d. NSAG 3 is allowed in tracking area TA2 and has priority 3. NSAG 4 includes S-NSSAI-a, b, and c. NSAG 4 is allowed in tracking area TA3 and has priority 1. NSAG 5 includes S-NSSAI-a, b, and c. NSAG 5 is allowed in tracking areas TA1 and TA2 and has priority 1. NSAG 6 includes S-NSSAI-a and c. NSAG 6 is allowed in tracking area TA1 and has priority 2.

The UE receives SIB4 630 configuring three frequencies: the n41 frequency band with priority 6, the n256 frequency band with priority 2, and the n1 frequency band with priority 3.

The UE receives SIB16 620. The SIB16 620 message includes three DL frequencies, DL F0, which is the serving frequency of the n78 frequency band, DL F1, which is the SIB4 frequency 1, e.g., the n41 frequency band, and DL F2, which is the SIB4 frequency 2, e.g., the n256 frequency band.

The DL F0 of the SIB16 620 includes NSAG 1-6, each with its associated re-selection priority, a list of allowed cells, and a list of rejected cells. For example, NSAG 1 has re-selection priority 5, NSAG 2 has re-selection priority 7, NSAG 3 has re-selection priority 5, NSAG 4 has re-selection priority 6, NSAG 5 has re-selection priority 7, and NSAG 6 has re-selection priority 6.

The DL F1 of the SIB16 620 includes NSAG 2-6, each with its associated re-selection priority, a list of allowed cells, and a list of rejected cells. For example, NSAG 2 has re-selection priority 7, NSAG 3 has re-selection priority 6, NSAG 4 has re-selection priority 7, NSAG 5 has re-selection priority 7, and NSAG 6 has re-selection priority 5.

The DL F2 of the SIB 16 620 includes NSAG 4 with its associated re-selection priority, a list of allowed cells, and a list of rejected cells. For example, NSAG 4 has re-selection priority 6.

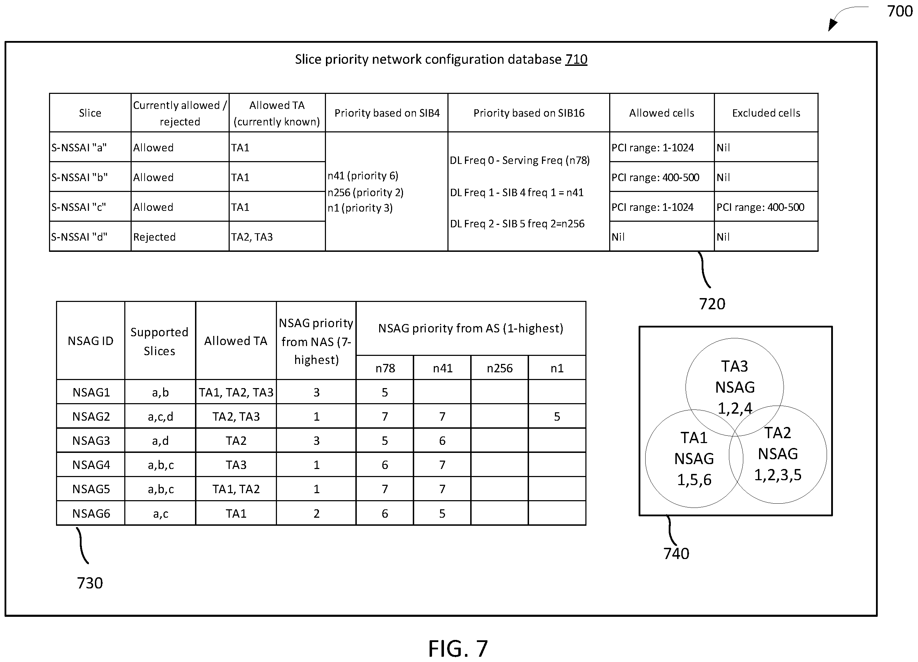

The UE may create a configuration database based on the information received from the complete NAS registration or UE configuration update command message and AS RRC SIB4 630 and SIB16 620 messages. FIG 7. and the related description below provide details on how the UE may implement the slice-priority network configuration database and provide scenarios describing how the UE may utilize the generated slice-priority network configuration database.

FIG. 7 illustrates some aspects of a configuration database 700 in accordance with some embodiments. In particular, slice prioritization 700 is an example of slice prioritization implementation based on broadcast information in SIB4 and SIB16 and NSAG information provided by NAS signaling. The UE may utilize the information in FIG. 6 and their description above to generate the slice-priority network configuration database 710.

The slice-priority network configuration database 710 may include broadcast configuration 720. Broadcast configuration 720 may be an example of slice-priority network configuration database 480 in FIG. 4. The UE may generate the broadcast configuration 720 based on information elements provided by SIB4 and SIB16 messages.

The first column, slice, of the broadcast configuration 720 includes the deployed S-NSSAIs a-d. The first column, slice, is obtained from the network deployment information that may be provided by NAS signaling.

The second column, currently allowed/rejected, of the broadcast configuration 720 indicates whether the corresponding slice is allowed or rejected. The UE may receive this information in the NAS registration Accept message.

The third column, allowed TA (currently known), of the broadcast configuration 720 lists the TAs in which the corresponding slice is allowed. The UE may receive this information in the NAS registration Accept message.

The fourth column, priority based on SIB4, of the broadcast configuration 720 includes the frequency re-selection priority based on SIB4. These priorities may not be associated with slices in the first column, slice.

The fifth column, priority based on SIB16, of the broadcast configuration 720 includes slice-based frequency re-selection priorities based on SIB16. The frequency re-selection priorities in this column may be based on the corresponding NSAG priorities associated with each frequency in SIB16.

The sixth column, allowed cells, of the broadcast configuration 720 includes the cells, e.g., provided by the PCI range, in which an S-NSSAI is allowed. The information in this column may be obtained from allowed cells associated with each frequency in SIB16.

Similarly, the seventh column, excluded cells, of the broadcast configuration 720 includes the cells, e.g., provided by the PCI range, in which an S-NSSAI is excluded. The information in this column may be obtained from excluded cells associated with each frequency in SIB16.

The slice-priority network configuration database 710 may include NAS configuration 730. The UE may generate the NAS configuration 730 based on information elements provided by NAS *Registration Accept* or UE *Configuration Update Command* messages.

The first column of the NAS configuration 730, NSAG ID, includes NSAG identification information. Each row of the NAS configuration 730 provides information associated with the corresponding NSAG.

The second column of the NAS configuration 730, supported slices, provides the S-NSSAIs or slices included or supported by the NSAG associated with the NSAG ID.

The third column of the NAS configuration 730, allowed TA, provides the list of tracking areas in which the NSAG associated with the NSAG ID is allowed.

The fourth column of the NAS configuration 730, NSAG priority from NAS, provides the priority of the NSAG associated with the NSAG ID.

The fifth through eighth columns of the NAS configuration 730, NSAG priority from AS, include the priority associated with each NSAG based on the broadcast configuration 720.

The slice-priority network configuration database 710 may include TA configuration 740 based on the NAS configuration 730. The TA configuration 740 includes the association between configured NSAGs and tracking areas. For example, TA configuration 740 indicates that TA1 allows NSAGs 1,5, and 6, TA2 allows NSAGs 1,2, 3 and 5, and TA3 allows NSAGs 1,2 and 4.

The following scenarios describe how the UE may utilize the slice-priority network configuration database 710. In these scenarios, it is assumed that the UE is camped to a cell in TA1. The following scenarios are examples of dynamic slice priority decision table entries.

In scenario 1, the UE invokes applications or services that require S-NSSAI-a and S-NSSAI-b. From NAS configuration 730, the UE may determine that the slices are supported in NSAGs 1, 4, and 5. Based on the list of NSAGs and TA configuration 740, the UE may determine that the requested slices are supported in tracking areas TA1, TA2, and TA3.

The S-NSSAI-a is the default eMBB slice with no restriction and is allowed in all TAs and PCIs.

For the application or service requesting S-NSSAI-b, the UE uses the information in the slice-priority network configuration database 710 associated with S-NSSAI-b. The UE may perform the following frequency re-selection optimization in combination with or followed by the PDU establishment optimization process described in FIG. 5.

If LTE camped to n78, based on NAS configuration 730, n78 supports all NSAGs. Therefore, NSAGs 1, 4, and 5 are potential candidates. Based on NAS configuration 730, NSAG 1 has a NAS priority of 3, NSAG 4 has a NAS priority of 1, and NSAG 5 has a NAS priority of 1. Based on TA configuration 740, NSAG 4 is not supported in the current UE's tracking area, TA1, and only NSAG 1 and 5 are supported in TA1. The UE may prioritize NSAG 1, having the highest priority, and stay in n78 and TA1. The UE may follow the PDU establishment flow as described in FIG. 5.

If LTE camped to n41, based on NAS configuration 730, NSAGs 2-6 are supported in n41. Therefore, NSAGs 4 and 5 are potential candidates. Based on NAS configuration 730, NSAG 4 has a NAS priority of 1, and NSAG 5 has a NAS priority of 1. The UE may determine to stay TA1. The UE may compare neighboring frequencies' radio frequency (RF) conditions to decide to stay in n41, with NSAG 4 and 5 or to re-select to n78, with NSAG 1 (highest NAS priority compared with NSAG 4 and 5). The UE may follow the PDU establishment flow as described in FIG. 5.

If LTE camped to n256, based on NAS configuration 730, no NSAG is supported in n256. The UE may determine to stay in TA1 and re-select to n78, with NSAG 1 having the highest NAS priority compared with NSAG 4 and 5). If n78 is not available, the UE may re-select to n41. The UE may follow the PDU establishment flow as described in FIG. 5.

If UE camped to n1, based on NAS configuration 730, only NSAG 2 is supported in n1, and NSAG 2 does not support slice b. The UE may stay in TA1 and re-select to n78, with NSAG 1 having the highest NAS priority compared with NSAG 4 and 5) and follow the PDU establishment flow as described in FIG. 5. If n78 is not available, the UE may re-select to n41.

In scenario 2, the UE invokes applications or services that require S-NSSAI-a and S-NSSAI-c. From NAS configuration 730, the UE may determine that the slices are supported in NSAGs 2, 4, 5, and 6. Based on the list of NSAGs and TA configuration 740, the UE may determine that the requested slices are supported in tracking areas TA1, TA2, and TA3.

The S-NSSAI-a is the default eMBB slice with no restriction and is allowed in all TAs and PCIs.

For the application or service requesting S-NSSAI-c, the UE uses the information in the slice-priority network configuration database 710 associated with S-NSSAI-c. The UE may perform the following frequency re-selection optimization in combination with or followed by the PDU establishment optimization process described in FIG. 5.

If UE camped to n78, based on NAS configuration 730, n78 supports all NSAGs. Therefore, NSAGs 2, 4, 5, and 6 are potential candidates. Based on NAS configuration 730, NSAG 2 has a NAS priority of 1, NSAG 4 has a NAS priority of 1, NSAG 5 has a NAS priority of 1, and NSAG 6 has a NAS priority of 2. Based on TA configuration 740, NSAG 2 and 4 are not supported in the current UE's tracking area, TA1, and only NSAG 5 and 6 are supported in TA1. The UE may prioritize NSAG 6, having the highest priority, and stay in n78 and TA1. The UE may follow the PDU establishment flow as described in FIG. 5.

If LTE camped to n41, based on NAS configuration 730, NSAGs 2-6 are supported in n41. Therefore, NSAGs 2, 4, 5, and 6 are potential candidates. Based on NAS configuration 730, NSAG 2 has a NAS priority of 1, NSAG 4 has a NAS priority of 1, NSAG 5 has a NAS priority of 1, and NSAG 6 has a NAS priority of 2. Based on TA configuration 740, NSAG 2 and 4 are not supported in the current UE's tracking area, TA1, and only NSAG 5 and 6 are supported in TA1. The UE may prioritize NSAG 6, having the highest priority, compare the RF conditions and stay in n41 and TA1. If the UE finds that n41 RF conditions is better than n78, highest priority frequency, by a certain threshold, the UE may re-select to n78. The UE may follow the PDU establishment flow as described in FIG. 5.

If LTE camped to n256, based on NAS configuration 730, no NSAG is supported in n256. The UE may determine to stay in TA1 and re-select to n78 or n41, with NSAG 6 having the highest NAS priority compared with NSAG 2, 4, and 5). The UE may choose between n78 and n41 based on RF measurement. The UE may follow the PDU establishment flow as described in FIG. 5.

If UE camped to n1, based on NAS configuration 730, only NSAG 2 is supported in n1. NSAG 2 has NAS priority 1, a lower priority than NSAG 6, which is not supported in n1. The UE may check if any n1 cell available in TA2 or TA3. If there is an n1 cell available in TA2 or TA3, the UE may compare RF conditions to decide whether to stay in n1, with NSAG 2 or to re-select to n78 or n41, with NSAG 6 having the highest NAS priority). If there is no n1 cell available in TA2 or TA3, the UE may stay in TA1, reselect to n78 or n41, whichever has a better RF energy or measurement, and choose NSAG 6. The UE may follow the PDU establishment flow as described in FIG. 5.

In scenario 3, the UE invokes applications or services that require S-NSSAI-a and S-NSSAI-d. From NAS configuration 730, the UE may determine that the slices are supported in NSAGs 2, 5, and 6. Based on the list of NSAGs and TA configuration 740, the UE may determine that the requested slices are supported in tracking areas TA2 and TA3.

The S-NSSAI-a is the default eMBB slice with no restriction and is allowed in all TAs and PCIs.

For the application or service requesting S-NSSAI-d, the UE uses the information in the slice-priority network configuration database 710 associated with S-NSSAI-d. The UE may perform the following frequency re-selection optimization in combination with or followed by the PDU establishment optimization process described in FIG. 5.

If UE camped to n78, based on NAS configuration 730, n78 supports all NSAGs. Therefore, NSAGs 2 and 3 are potential candidates. Based on NAS configuration 730, NSAG 2 has a NAS priority of 1, and NSAG 3 has a NAS priority of 3. Based on TA configuration 740, NSAG 2 and 3 are not supported in the current UE's tracking area, TA1. The UE may prioritize NSAG 3, having the highest priority among the potential NSAG candidates. NSAG 3 is only supported in TA3, and NSAG 2, the second highest NAS priority, is supported in TA2 and TA3. The UE may use the following order of steps to perform the frequency re-selection optimization.

In step 1, UE may determine whether an n78 cell in TA2 is available. If an n78 cell in TA2 is available, the UE may reselect to n78 in TA2 with NSAG 3. The UE may perform the following frequency re-selection optimization in combination with or followed by the PDU establishment optimization process described in FIG. 5. If an n78 cell in TA2 is not available, the UE may perform the operations in step 2.

In step 2, UE may determine whether an n41 cell is available in TA2. If an n41 cell in TA2 is available, the UE may reselect to n41 in TA2 with NSAG 3. The UE may perform the following frequency re-selection optimization in combination with or followed by the PDU establishment optimization process described in FIG. 5. If an n41 cell in TA2 is not available, the UE may perform the operations in step 3.

In step 3, UE may determine whether an n78 cell is available in TA3. If an n78 cell in TA3 is available, the UE may reselect to n78 in TA3 with NSAG 2. The UE may perform the following frequency re-selection optimization in combination with or followed by the PDU establishment optimization process described in FIG. 5. If an n78 cell in TA3 is not available, the UE may perform the operations in step 4.

In step 4, UE may determine whether an n41 cell is available in TA3. If an n41 cell in TA3 is available, the UE may reselect to n41 in TA3 with NSAG 2. The UE may perform the following frequency re-selection optimization in combination with or followed by the PDU establishment optimization process described in FIG. 5. If an n41 cell in TA3 is not available, the UE may perform the operations in step 5.

In step 5, UE may determine whether an n1 cell is available in TA3. If an n1 cell in TA3 is available, the UE may reselect to n1 in TA3 with NSAG 2. The UE may perform the following frequency re-selection optimization in combination with or followed by the PDU establishment optimization process described in FIG. 5. If an n1 cell in TA3 is not available, the UE may perform the operations in step 6.

In step 6, UE may determine whether to map the traffic to the default slice, e.g., S-NSSAI-a or eMBB slice.

If LTE camped to n41, the UE may follow the same procedure as when the UE camped to n78, described above.

If LTE camped to n256, based on NAS configuration 730, no NSAG is supported in n256. The UE may scan for n78 or n41 cells in TA2 or TA3. The UE may prioritize the order of scanning for suitable cells. Based on the slice-priority network configuration database 710, the UE may first scan for cells in n78 in TA2, then for cells in n41 in TA2, then for n78 cells in TA3, then for n41 cells in TA3, and finally for n1 cells in TA3. If a suitable cell is found, The UE may perform the following frequency re-selection optimization in combination with or followed by the PDU establishment optimization process described in FIG. 5. If no cell is found, the UE may determine whether to map the traffic to the default slice, e.g., the S-NSSAI-a or eMBB slice.

If LTE camped to n1, the UE may follow the same procedure as when the UE camped on n78, described above.

In scenario 4, the UE invokes applications or services that require S-NSSAI-a, S-NSSAI-b, and S-NSSAI-c. From NAS configuration 730, the UE may determine that the slices are supported in NSAGs 4 and 5. In this scenario, NSAG 4 and 6 have the same NAS priority of 1 but different AS priorities. NSAG 5 has the same priority for n78 and n41, an AS priority of 7, but NSAG 4 has different priorities for n78 and n41. NSAG 4 has an AS priority of 6 in n78 and an AS priority of 7 in n41. Note that in this example, the smaller the value of AS priority, the higher the priority. Therefore, in n41, NSAG 4, with AS priority of 6, has a higher priority than NSAG 5, with an AS priority of 7. Based on the list of NSAGs and TA configuration 740, the UE may determine that the requested slices are supported in tracking areas TA1, TA2, and TA3.

The S-NSSAI-a is the default eMBB slice with no restriction and is allowed in all TAs and PCIs.

For the application or service requesting S-NSSAI-b and c, the UE may use the information in the slice-priority network configuration database 710 associated with S-NSSAI-b and c. The UE may perform the following frequency re-selection optimization in combination with or followed by the PDU establishment optimization process described in FIG. 5.

If LTE camped to n78, based on NAS configuration 730, n78 supports all NSAGs. Therefore, NSAGs 4 and 5 are potential candidates. UE may measure n41 and n78 cells in TA1, TA2, and TA3. The UE may take the following order of steps to perform the frequency re-selection optimization.

In step 1, the UE may determine whether the RSRP of n41 in TA3 is better than that of n78 in TA1 or TA2 by more than 10 dBm. If the RSRP of n41 in TA3 is better than that of n78 in TA1 or TA2 by more than 10 decibel milliwatt (dBm), the UE may re-select to n41, with NSAG 4 having the highest AS priority from SIB16. The UE may perform the following frequency re-selection optimization in combination with or followed by the PDU establishment optimization process described in FIG. 5. If the RSRP of n41 in TA3 is not better than that of n78 in TA1 or TA2 by more than 10 dBm, the UE may perform the operations in step 2.

In step 2, the UE may determine whether the RSRP of n41 in TA1 or TA2 or the RSRP of n78 in TA2 is better than the RSRP of n78 in TA1 by more than 7 dBm. If the RSRP of n41 in TA1 or TA2 or the RSRP of n78 in TA2 is better than the RSRP of n78 in TA1 by more than 7 dBm, the UE may prioritize NSAG 5 and reselect to n41 or n78, whichever satisfies the 7 dBm threshold. The UE may perform the following frequency re-selection optimization in combination with or followed by the PDU establishment optimization process described in FIG. 5. If the RSRP of n41 in TA1 or TA2 or the RSRP of n78 in TA2 is not better than the RSRP of n78 in TA1 by more than 7 dBm, the UE may perform the operations in step 3.

In step 3, the UE may prioritize NSAG 5 and stay in n78 of TA1. The UE may perform the following frequency re-selection optimization in combination with or followed by the PDU establishment optimization process described in FIG. 5. UE may take this step to avoid additional re-selection procedure.

If LTE camped to n41, based on NAS configuration 730, n41 supports NSAGs 2-6. Therefore, NSAGs 4 and 5 are potential candidates. UE may measure n41 and n78 cells in TA1, TA2, and TA3. The UE may take the following order of steps to perform the frequency re-selection optimization.

In step 1, the UE may determine whether the RSRP of n41 in TA3 is better than that of n41 in TA1 by more than 8 dBm. If the RSRP of n41 in TA3 is better than that of n41 in TA1 by more than 8 dBm, the UE may re-select to n41 in TA3, with NSAG 4 having the highest AS priority from SIB16. The UE may perform the following frequency re-selection optimization in combination with or followed by the PDU establishment optimization process described in FIG. 5. If the RSRP of n41 in TA3 is not better than that of n41 in TA1 by more than 8 dBm, the UE may perform the operations in step 2.

In step 2, the UE may prioritize NSAG 5 and stay in n41 of TA1. The UE may perform the following frequency re-selection optimization in combination with or followed by the PDU establishment optimization process described in FIG. 5. UE may take this step to avoid additional re-selection procedure.

If LTE camped to n256, based on NAS configuration 730, no NSAG is supported in n256. UE may measure n41 and n78 cells in TA1, TA2, and TA3. UE may re-select to the highest-ranked frequency with better measurement. The UE may perform the following frequency re-selection optimization in combination with or followed by the PDU establishment optimization process described in FIG. 5. If no cells in n41 or n78 were available, the UE may determine whether to map the traffic to the default slice, e.g., S-NSSAI-a or eMBB slice.

If LTE camped on n1, based on NAS configuration 730, only NSAG 2 is supported in n1. NSAG 2 does not support S-NSSAI-b. UE may measure n41 and n78 cells in TA1, TA2, and TA3. UE may re-select to the highest-ranked frequency with better measurement. The UE may perform the following frequency re-selection optimization in combination with or followed by the PDU establishment optimization process described in FIG. 5. If no cells in n41 or n78 were available, the UE may determine whether to map the traffic to the default slice, e.g., S-NSSAI-a or eMBB slice.

In scenario 5, the UE invokes applications or services that require S-NSSAI-a, S-NSSAI-c, and S-NSSAI-d. From NAS configuration 730, the UE may determine that the slices are supported in NSAGs 2. Based on the list of NSAGs and TA configuration 740, the UE may determine that NSAG 2 is the only supported NSAG with NAS priority 1 supported in n78, n41, and n1 in TA2 and TA3.

The S-NSSAI-a is the default eMBB slice with no restriction and is allowed in all TAs and PCIs.

For the application or service requesting S-NSSAI-c and d, the UE may use the information in the slice-priority network configuration database 710 associated with S-NSSAI-c and d. The UE may perform the following frequency re-selection optimization in combination with or followed by the PDU establishment optimization process described in FIG. 5.

If LTE camped to n78, based on NAS configuration 730, NSAG 2 is the only potential candidate with NAS priority 1. UE may measure n78, n41, and n1 cells in TA1, TA2, and TA3. The UE may take the following order of steps to perform the frequency re-selection optimization.

In step 1, the UE may determine whether the RSRP of n41 in any TA is better than that of n78 in TA1 by more than 10 dBm. If the RSRP of n41 in any TA is better than that of n78 in TA1 by more than 10 dBm, the UE may re-select to n41. The UE may perform the following frequency re-selection optimization in combination with or followed by the PDU establishment optimization process described in FIG. 5. If the RSRP of n41 in any TA is not better than that of n78 in TA1 by more than 10 dBm, the UE may perform the operations in step 2.

In step 2, the UE may determine whether the RSRP of n1 in any TA is better than the RSRP of n78 in TA1 by more than 15 dBm. If the RSRP of n1 in any TA is better than the RSRP of n78 in TA1 by more than 15 dBm, the UE may reselect to n1. The UE may perform the following frequency re-selection optimization in combination with or followed by the PDU establishment optimization process described in FIG. 5. If the RSRP of n1 in any TA is not better than the RSRP of n78 in TA1 by more than 15 dBm, the UE may perform the operations in step 3.

In step 3, the UE may stay in n78 of TA1. The UE may perform the following frequency re-selection optimization in combination with or followed by the PDU establishment optimization process described in FIG. 5.

If LTE camped to n41, based on NAS configuration 730, NSAG 2 is the only potential candidate with NAS priority 1. UE may measure n78, n41, and n1 cells in TA1, TA2, and TA3. The UE may take the following order of steps to perform the frequency re-selection optimization.

In step 1, the UE may determine whether the RSRP of n78 in any TA is better than that of n41 in TA1 by more than 8 dBm. If the RSRP of n78 in any TA is better than that of n41 in TA1 by more than 8 dBm, the UE may re-select to n78. The UE may perform the following frequency re-selection optimization in combination with or followed by the PDU establishment optimization process described in FIG. 5. If the RSRP of n78 in any TA is not better than that of n41 in TA1 by more than 8 dBm, the UE may perform the operations in step 2.

In step 2, the UE may determine whether the RSRP of n1 in any TA is better than that of n41 in TA1 by more than 15 dBm. If the RSRP of n1 in any TA is better than that of n41 in TA1 by more than 15 dBm, the UE may re-select to n1. The UE may perform the following frequency re-selection optimization in combination with or followed by the PDU establishment optimization process described in FIG. 5. If the RSRP of n1 in any TA is not better than that of n41 in TA1 by more than 15 dBm, the UE may perform the operations in step 3.

In step 3, the UE may stay in n41 of TA1. The UE may perform the following frequency re-selection optimization in combination with or followed by the PDU establishment optimization process described in FIG. 5.

If LTE camped to n256, based on NAS configuration 730, no NSAG is supported in n256. UE may measure n41, n78, and n1 cells in TA1, TA2, and TA3. UE may re-select to the highest-ranked frequency with better measurement. The UE may perform the following frequency re-selection optimization in combination with or followed by the PDU establishment optimization process described in FIG. 5. If no cells in n41, n78, or n1 were available, the UE may determine whether to map the traffic to the default slice, e.g., S-NSSAI-a or eMBB slice.

If LTE camped on n1, based on NAS configuration 730, only NSAG 2 is supported in n1, and NSAG 2 is the only potential candidate with NAS priority 1. UE may measure n78, n41, and n1 cells in TA1, TA2, and TA3. The UE may take the following order of steps to perform the frequency re-selection optimization.

In step 1, the UE may determine whether the RSRP of n78 in any TA is better than that of n1 in TA1 by more than 6 dBm. If the RSRP of n78 in any TA is better than that of n1 in TA1 by more than 6 dBm, the UE may re-select to n78. The UE may perform the following frequency re-selection optimization in combination with or followed by the PDU establishment optimization process described in FIG. 5. If the RSRP of n78 in any TA is not better than that of n1 in TA1 by more than 6 dBm, the UE may perform the operations in step 2.

In step 2, the UE may determine whether the RSRP of n41 in any TA is better than that of n1 in TA1 by more than 15 dBm. If the RSRP of n41 in any TA is better than that of n1 in TA1 by more than 15 dBm, the UE may re-select to n1. The UE may perform the following frequency re-selection optimization in combination with or followed by the PDU establishment optimization process described in FIG. 5. If the RSRP of n41 in any TA is not better than that of n1 in TA1 by more than 15 dBm, the UE may perform the operations in step 3.

In step 3, the UE may stay in n1 of TA1. The UE may perform the following frequency re-selection optimization in combination with or followed by the PDU establishment optimization process described in FIG. 5.

In scenario 6, the UE invokes applications or services that require S-NSSAI-a, S-NSSAI-b, S-NSSAI-c, and S-NSSAI-d. From NAS configuration 730, the UE may determine that no NSAG supports all 4 slices.

The S-NSSAI-a is the default eMBB slice with no restriction and is allowed in all TAs and PCIs.

UE may use the slice priority based on usage or impact, as described in FIG. 5, to decide which slice could be ignored while the other slices can be served.

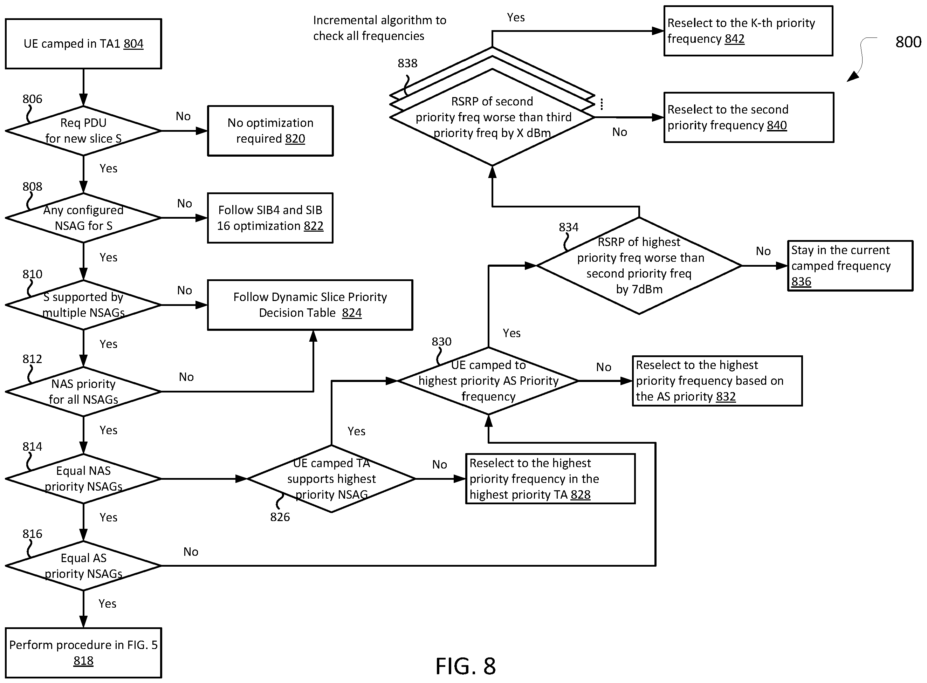

FIG. 8 illustrates an operational flow/algorithmic structure 800 in accordance with some embodiments. The operation flow/algorithmic structure 800 may be implemented by a UE (for example, UE 104 or UE 1400) or components therein, for example, processing circuitry 1404.

The operation flow/algorithmic structure 800 may include, at 804, camping in a tracking area, e.g., TA1. The UE may perform the registration process and receive the AS and NAS configurations for re-selection. The UE may generate the slice-priority network configuration based on the AS and NAS configuration that UE may use for performing re-selection.

The operation flow/algorithmic structure 800 may include, at 806, determining whether there is a request to establish a PDU session for a new slice. Based on the determination that there is a request to establish a PDU session for a new slice, the operation flow/algorithmic structure 800 proceeds to step 808 following the "Yes" branch. Based on the determination that there is not a request to establish a PDU session for a new slice, the operation flow/algorithmic structure 800 proceeds to step 820 following the "No" branch.

The operation flow/algorithmic structure 800 may include, at 808, determining whether there is any NSAG configured for the requested new slice. Based on the determination that there is any NSAG configured for the requested new slice, the operation flow/algorithmic structure 800 proceeds to step 810 following the "Yes" branch. Based on the determination that there is no NSAG configured for the requested new slice, the operation flow/algorithmic structure 800 proceeds to step 822 following the "No" branch.

The operation flow/algorithmic structure 800 may include, at 810, determining whether the requested new slice is supported by multiple NSAGs. Based on the determination that the requested new slice is supported by multiple NSAGs, the operation flow/algorithmic structure 800 proceeds to step 812 following the "Yes" branch. Based on the determination that the requested new slice is not supported by multiple NSAGs, the operation flow/algorithmic structure 800 proceeds to step 824 following the "No" branch.

The operation flow/algorithmic structure 800 may include, at 812, determining whether NAS priority is provided for all NSAGs. Based on the determination that NAS priority is provided for all NSAGs, the operation flow/algorithmic structure 800 proceeds to step 814 following the "Yes" branch. Based on the determination that NAS priority is not provided for all NSAGs, the operation flow/algorithmic structure 800 proceeds to step 824 following the "No" branch.

The operation flow/algorithmic structure 800 may include, at 814, determining whether NSAGs have equal NAS priorities. Based on the determination that NSAGs have equal NAS priorities, the operation flow/algorithmic structure 800 proceeds to step 816 following the "Yes" branch. Based on the determination that NSAGs do not have equal NAS priorities, the operation flow/algorithmic structure 800 proceeds to step 826 following the "No" branch.

The operation flow/algorithmic structure 800 may include, at 816, determining whether NSAGs have equal AS priorities. Based on the determination that NSAGs have equal AS priorities, the operation flow/algorithmic structure 800 proceeds to step 818 following the "Yes" branch. Based on the determination that NSAGs do not have equal AS priorities, the operation flow/algorithmic structure 800 proceeds to step 830 following the "No" branch.

The operation flow/algorithmic structure 800 may include, at 818, performing operation flow/algorithmic structure 500 described in FIG. 5. The UE may stay in the current camped frequency. The UE may populate the dynamic slice priority decision table for NSAG prioritization.

The operation flow/algorithmic structure 800 may include, at 820, waiting for a request for a new slice invoked by a service or application. There is no need to perform any slice re-selection optimization procedure.

The operation flow/algorithmic structure 800 may include, at 822, performing slice priority and inter-frequency re-selection based on SIB4 and SIB16 configurations.

The operation flow/algorithmic structure 800 may include, at 824, determining to stay or re-select to the highest priority frequency and TA to establish a PDU session based on the dynamic slice priority decision table.

The operation flow/algorithmic structure 800 may include, at 826, determining whether the UE is camped to the TA, which supports the high-priority NSAG. Based on the determination that the UE is camped to the TA, which supports the high-priority NSAG, the operation flow/algorithmic structure 800 proceeds to step 830 following the "Yes" branch. Based on the determination that the UE is not camped to the TA, which supports the high-priority NSAG, the operation flow/algorithmic structure 800 proceeds to step 828 following the "No" branch.

The operation flow/algorithmic structure 800 may include, at 828, re-selecting to the highest priority frequency in the highest priority TA. The UE may populate or follow the dynamic slice priority decision table for NSAG prioritization. The UE may perform PDU establishment optimizations of the operation flow/algorithmic structure 500, described in FIG. 5.

The operation flow/algorithmic structure 800 may include, at 830, determining whether the UE is camped to the frequency having the highest AS priority. Based on the determination that the UE is camped to the highest AS priority frequency, the operation flow/algorithmic structure 800 proceeds to step 834 following the "Yes" branch. Based on the determination that the UE is not camped to the highest AS priority frequency, the operation flow/algorithmic structure 800 proceeds to step 832 following the "No" branch.

The operation flow/algorithmic structure 800 may include, at 832, re-selecting to the highest priority frequency. The UE may populate or follow the dynamic slice priority decision table for NSAG prioritization. The UE may perform PDU establishment optimizations of the operation flow/algorithmic structure 500, described in FIG. 5.

The operation flow/algorithmic structure 800 may include, at 834, determining whether the RSRP of high-priority frequency is worse than second-priority frequency by a threshold, e.g., the threshold may be equal to 6, 7, 8, 10, or 15 dBm. Based on the determination that the RSRP of high-priority frequency is worse than second-priority frequency by a threshold, e.g., the threshold may be equal to 6, 7, 8, 10, or 15 dBm, the operation flow/algorithmic structure 800 proceeds to step 838 following the "Yes" branch. Based on the determination that the RSRP of high-priority frequency is not worse than second-priority frequency by a threshold, e.g., the threshold may be equal to 6, 7, 8, 10, or 15 dBm, the operation flow/algorithmic structure 800 proceeds to step 836 following the "No" branch.

The operation flow/algorithmic structure 800 may include, at 836, staying in the current camped frequency. The UE may populate or follow the dynamic slice priority decision table for NSAG prioritization. The UE may perform PDU establishment optimizations of the operation flow/algorithmic structure 500, described in FIG. 5.

The operation flow/algorithmic structure 800 may include, at 838, determining whether the RSRP of second-priority frequency is worse than Kth-priority frequency by X, e.g., X may be equal to 6, 7, 8, 10, or 15 dBm. Based on the determination that the RSRP of second-priority frequency is worse than Kth-priority frequency by X, e.g., X may be equal to 6, 7, 8, 10, or 15 dBm, the operation flow/algorithmic structure 800 proceeds to step 842 following the "Yes" branch. Based on the determination that the RSRP of second-priority frequency is not worse than Kth-priority frequency by X, e.g., X may be equal to 6, 7, 8, 10, or 15 dBm, the operation flow/algorithmic structure 800 proceeds to step 840 following the "No" branch.

The operation flow/algorithmic structure 800 may include, at 840, re-selecting to the second-priority frequency. The UE may populate or follow the dynamic slice priority decision table for NSAG prioritization. The UE may perform PDU establishment optimizations of the operation flow/algorithmic structure 500, described in FIG. 5.

The operation flow/algorithmic structure 800 may include, at 842, re-selecting to the Kth-priority frequency. The UE may populate or follow the dynamic slice priority decision table for NSAG prioritization. The UE may perform PDU establishment optimizations of the operation flow/algorithmic structure 500, described in FIG. 5.

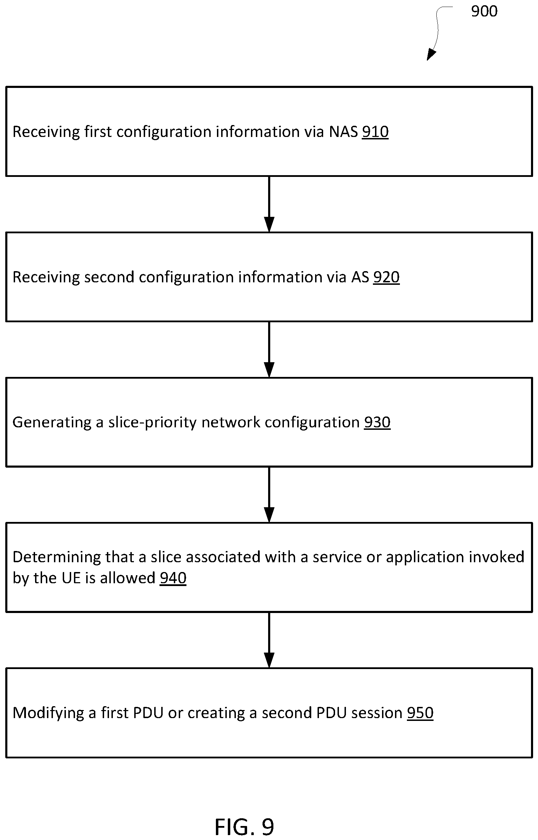

FIG. 9 illustrates an operational flow/algorithmic structure 900 in accordance with some embodiments. The operation flow/algorithmic structure 900 may be implemented by a UE (for example, UE 104 or UE 1400) or components therein, for example, processing circuitry 1404.

The operation flow/algorithmic structure 900 may include, at 910, receiving first configuration information via NAS signaling. NAS signaling may include registration accept or UE configuration update command messages. The first configuration information may include the deployed S-NSSAIs, NSAG information, or a list of allowed or rejected S-NSSAIs requested by the LTE.

The operation flow/algorithmic structure 900 may include, at 920, receiving second configuration information via AS signaling, e.g., broadcast system information. AS signaling may be RRC signaling. For example, AS signaling may include SIB4 or SIB16. The second configuration information may include the frequency band and their priorities, or the frequency bands and associated NSAG, allowed or rejected cells, or NSAG priorities.

The operation flow/algorithmic structure 900 may include, at 930, generating a slice-priority network configuration based on the first configuration information and the second configuration information.

The operation flow/algorithmic structure 900 may include, at 940, determining that a slice associated with a service or application invoked by the UE is allowed. UE may make this determination based on the generated slice-priority network configuration. The UE may also determine whether a PDU session mapped to the requested slice already exists.

The operation flow/algorithmic structure 900 may include, at 950, modifying a first PDU session or creating a second PDU session. For example, the UE may determine that an AMBR is associated with the slice and consequently modify an existing PDU session to transport the invoked service or application data.

In another example, the UE may determine that the service or application invoked by the UE requires non-GBR QoS and consequently modify an existing PDU session to transport the invoked service or application data.

In another example, the UE may determine that the service or application invoked by the UE requires a PDU session that supports URLLS QoS and determine that the existing PDU sessions do not support URLLS QoS. Consequently, the UE may create the second PDU session that supports URLLS QoS.

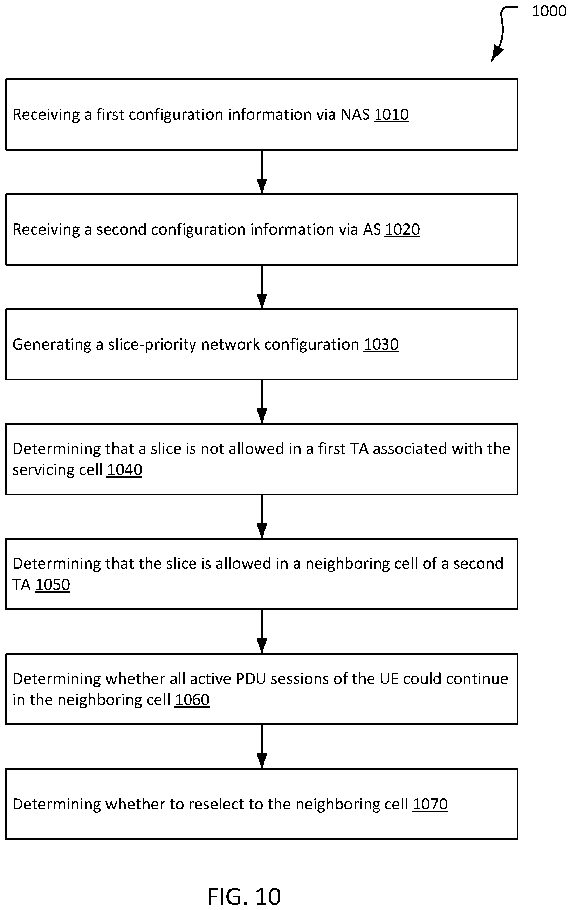

FIG. 10 illustrates an operational flow/algorithmic structure 1000 in accordance with some embodiments. The operation flow/algorithmic structure 1000 may be implemented by a UE (for example, UE 104 or UE 1400) or components therein, for example, processing circuitry 1404.

The operation flow/algorithmic structure 1000 may include, at 1010, similar actions as in the operation flow/algorithmic structure 900 at 910.

The operation flow/algorithmic structure 1000 may include, at 1020, similar actions as in the operation flow/algorithmic structure 900 at 920.

The operation flow/algorithmic structure 1000 may include, at 1030, similar actions as in the operation flow/algorithmic structure 900 at 930.

The operation flow/algorithmic structure 1000 may include, at 1040, determining that a slice associated with a service or application invoked by the UE is not allowed in a first tracking area. The first tracking area may be associated with the UE's serving cell. The first tracking area may be the current tracking area where the UE is camped. The UE may make the determination based on the generated slice-priority network configuration.

The operation flow/algorithmic structure 1000 may include, at 1050, determining that the slice associated with a service or application invoked by the UE is allowed in a neighboring cell of a second tracking area. The second tracking area may be a neighboring tracking area. The neighboring tracking area may be geographically adjacent to the current tracking area where the UE is camped. The network may determine and configure the neighboring tracking area and may not be geographically adjacent to the current tracking area. The neighboring cell may be a cell that the UE has detected and is not the serving cell or a cell that the UE monitors, e.g., searching for associated reference signals and detecting associated control information. The network may configure the UE to monitor a neighboring cell. The UE may make the determination at 1050 based on the generated slice-priority network configuration.

The operation flow/algorithmic structure 1000 may include, at 1060, determining whether all active PDU sessions of the UE could continue in the neighboring cell of the second TA. A PDU session may continue in the neighboring cell of the second TA if the neighboring cell supports the slice to which the PDU session is mapped. The UE may make the determination based on the generated slice-priority network configuration.

The operation flow/algorithmic structure 1000 may include, at 1070, determining whether to re-select to the neighboring cell of the second TA. The UE may make the determination based on the determination at 1060, e.g., determining whether all active PDU sessions of the UE could continue in the neighboring cell of the second TA.

If the UE determines that all active PDU sessions of the UE could continue in the neighboring cell, the UE may re-select the neighboring cell of the second TA. The UE may send a registration request message indicating the slice associated with the service or application invoked by the UE.

If the UE determines that not all active PDU sessions of the UE could continue in the neighboring cell of the second TA, the UE may perform slice priority based on usage or impact. The UE may identify a PDU that cannot continue in the neighboring cell and determine whether the PDU session is low priority based on usage or impact. If the identified PDU session is low priority based on usage or impact, the UE may release the PDU session or map the PDU session to a default slice. The default slice may be a slice that is supported in all cells and all TAs, e.g., the eMBB slice. The UE may re-select the neighboring cell based on releasing or mapping the PDU sessions that cannot be supported by the neighboring cell.

The UE may perform slice priority based on usage or impact. In slice priority based on usage or impact, the UE may identify a PDU that cannot continue in the candidate cell and determine whether the PDU session is low priority based on usage or impact. If the identified PDU session is low priority based on usage or impact, the UE may release the PDU session or map the PDU session to a default slice. The default slice may be a slice that is supported in all cells and all TAs, e.g., the eMBB slice.

In one instance, a PDU session with minimal usage, e.g., a dormant PDU session, may be identified as a low priority based on usage or impact. In another instance, a slice or a PDU session that could be mapped to the eMBB slice may be identified as a low-impact slice or PDU session with low priority based on usage or impact. In another instance, a service or application mapped to a slice not in use may be identified as low priority based on usage or impact.

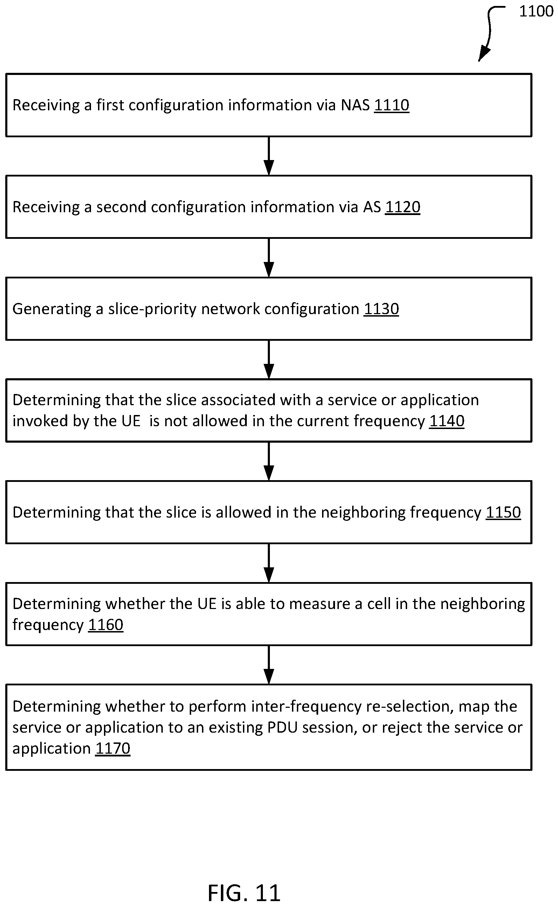

FIG. 11 illustrates an operational flow/algorithmic structure 1100 in accordance with some embodiments. The operation flow/algorithmic structure 1100 may be implemented by a UE (for example, UE 104 or UE 1400) or components therein, for example, processing circuitry 1404.

The operation flow/algorithmic structure 1100 may include, at 1110, similar actions as in the operation flow/algorithmic structure 900 at 910.

The operation flow/algorithmic structure 1100 may include, at 1120, similar actions as in the operation flow/algorithmic structure 900 at 920.

The operation flow/algorithmic structure 1100 may include, at 1130, similar actions as in the operation flow/algorithmic structure 900 at 930.

The operation flow/algorithmic structure 1100 may include, at 1140, determining that a slice associated with a service or application invoked by the UE is not allowed in a first frequency. The first frequency may be the current frequency in which the UE is camped. The first frequency may be associated with the UE's serving cell. The UE may make the determination based on the generated slice-priority network configuration.

The operation flow/algorithmic structure 1100 may include, at 1150, determining that the slice associated with a service or application invoked by the UE is allowed in a neighboring frequency. The neighboring frequency may be a frequency other than the current frequency of the same TA. The neighboring frequency may be a frequency that the UE configures and not the current frequency. The network may configure the UE to monitor a neighboring cell. The UE may make the determination at 1150 based on the generated slice-priority network configuration.

The operation flow/algorithmic structure 1100 may include, at 1160, determining whether the UE is able to measure cells in the neighboring frequency. The neighboring frequency may include one or more cells. The UE may detect a cell in the neighboring frequency. The UE may be configured to monitor and measure a cell of one or more cells of the neighboring frequency. If the UE is not configured or has not detected a cell in the neighboring frequency, the UE may not be able to measure that cell. The neighboring cell configuration may include information about reference signals and measurement information.

The operation flow/algorithmic structure 1100 may include, at 1170, determining whether to perform inter-frequency re-selection, map the service or application to an existing PDU session, or reject the service or application invoked by the LTE. The UE may make the determination based on the determination at 1160, e.g., whether the UE is able to measure cells in the neighboring frequency.

If the UE is able to measure a cell, the UE may generate a list that includes all the measured cells of all the neighboring frequencies. The UE may determine whether all active PDU sessions of the UE could continue in any of the measured cells in the generated list. The UE may generate a list of candidate cells. Each candidate cell in that list can support all active PDU sessions of the LTE.

Suppose there are candidate cells that could support all active PDU sessions of the LTE. In that case, the UE may perform frequency re-selection optimization and PDU establishment optimization procedures to identify the suitable cell. The UE may perform inter-frequency re-selection to the identified suitable cell.

If the UE determines that not all active PDU sessions of the UE could continue in the candidate cell in the neighboring frequency, the UE may perform slice priority based on usage or impact. The UE may identify a PDU that cannot continue in the neighboring cell and determine whether the PDU session is low priority based on usage or impact. If the identified PDU session is low priority based on usage or impact, the UE may release the PDU session or map the PDU session to a default slice. The default slice may be a slice that is supported in all cells and all TAs, e.g., the eMBB slice. The UE may re-select the candidate cell based on releasing or mapping the PDU sessions that cannot continue in the candidate cell.

The UE may perform slice priority based on usage or impact. In slice priority based on usage or impact, the UE may identify a PDU that cannot continue in the candidate cell and determine whether the PDU session is low priority based on usage or impact. If the identified PDU session is low priority based on usage or impact, the UE may release the PDU session or map the PDU session to a default slice. The default slice may be a slice that is supported in all cells and all TAs, e.g., the eMBB slice.

In one instance, a PDU session with minimal usage, e.g., a dormant PDU session, may be identified as a low priority based on usage or impact. In another instance, a slice or a PDU session that could be mapped to an eMBB slice may be identified as a low-impact slice or PDU session with low priority based on usage or impact. In another instance, a service or application mapped to a slice not in use may be identified as low priority based on usage or impact.

If the UE cannot find a suitable cell, the UE may reject the service or application invoked by the UE and notify the UE accordingly, e.g., by sending a pop-up message.

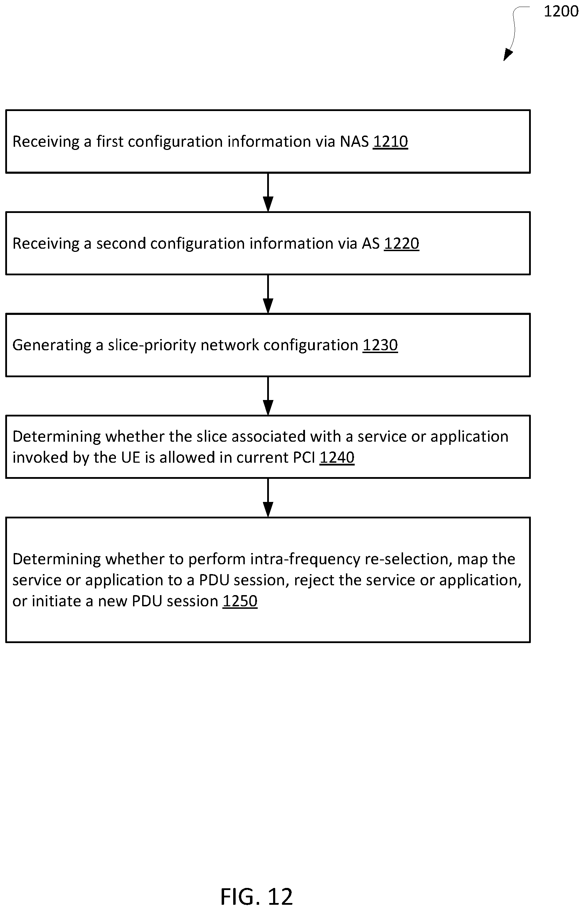

FIG. 12 illustrates an operational flow/algorithmic structure 1200 in accordance with some embodiments. The operation flow/algorithmic structure 1200 may be implemented by a UE (for example, UE 104 or UE 1400) or components therein, for example, processing circuitry 1404.

The operation flow/algorithmic structure 1200 may include, at 1210, similar actions as in the operation flow/algorithmic structure 900 at 910.

The operation flow/algorithmic structure 1200 may include, at 1220, similar actions as in the operation flow/algorithmic structure 900 at 920.

The operation flow/algorithmic structure 1200 may include, at 1230, similar actions as in the operation flow/algorithmic structure 900 at 930.

The operation flow/algorithmic structure 1200 may include, at 1240, determining whether a slice associated with a service or application invoked by the UE is allowed in a current PCI. Current PCI may identify the cell the UE is currently connected to. The UE may make the determination based on the generated slice-priority network configuration.

The operation flow/algorithmic structure 1200 may include, at 1250, determining whether the UE to perform inter-frequency re-selection, map the service or application to an existing PDU session, reject the service or application invoked by the UE, or initiate a new PDU session. The UE may make the determination based on the determination at 1240, e.g., whether the slice is allowed in the current PCI.

If the UE determines that the slice is allowed in the current PCI, the UE may initiate a new PDU session for the associated service or application.

However, if the UE determines that the slice is not allowed in the current PCI, the UE may determine that the UE is able to measure a neighboring PCI. The UE may generate a list of measured neighboring PCIs. The UE may determine whether all active PDU sessions could continue in the neighboring PCI.

If the UE determines that all PDU sessions could continue in the neighboring PCI, the UE may perform intra-frequency re-selection to the neighboring PCI.

If the UE determines that not all active PDU sessions of the UE could continue in the neighboring PCI, the UE may perform slice priority based on usage or impact. The UE may identify a PDU that cannot continue in the neighboring cell and determine whether the PDU session is low priority based on usage or impact. If the identified PDU session is low priority based on usage or impact, the UE may release the PDU session or map the PDU session to a default slice. The default slice may be a slice that is supported in all cells and all TAs, e.g., the eMBB slice. The UE may re-select the neighboring PCI based on releasing or mapping the PDU sessions that cannot continue in the neighboring PCI.

The UE may perform slice priority based on usage or impact. In slice priority based on usage or impact, the UE may identify a PDU that cannot continue in the candidate cell and determine whether the PDU session is low priority based on usage or impact. If the identified PDU session is low priority based on usage or impact, the UE may release the PDU session or map the PDU session to a default slice. The default slice may be a slice that is supported in all cells and all TAs, e.g., the eMBB slice.

In one instance, a PDU session with minimal usage, e.g., a dormant PDU session, may be identified as a low priority based on usage or impact. In another instance, a slice or a PDU session that could be mapped to an eMBB slice may be identified as a low-impact slice or PDU session with low priority based on usage or impact. In another instance, a service or application mapped to a slice not in use may be identified as low priority based on usage or impact.

If the UE cannot find a suitable PCI, the UE may reject the service or application invoked by the UE and notify the UE accordingly, e.g., by sending a pop-up message.

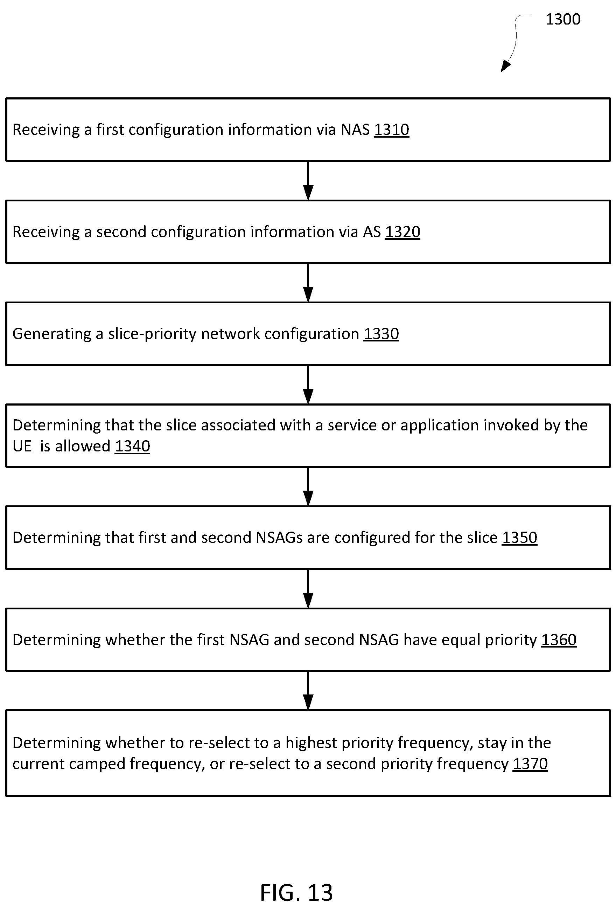

FIG. 13 illustrates an operational flow/algorithmic structure 1300 in accordance with some embodiments. The operation flow/algorithmic structure 1300 may be implemented by a UE (for example, UE 104 or UE 1400) or components therein, for example, processing circuitry 1404.

The operation flow/algorithmic structure 1300 may include, at 1310, similar actions as in the operation flow/algorithmic structure 900 at 910.

The operation flow/algorithmic structure 1300 may include, at 1320, similar actions as in the operation flow/algorithmic structure 900 at 920.

The operation flow/algorithmic structure 1300 may include, at 1330, similar actions as in the operation flow/algorithmic structure 900 at 930.

The operation flow/algorithmic structure 1300 may include, at 1340, determining that a slice associated with a service or application invoked by the UE is allowed. UE may make this determination based on the generated slice-priority network configuration. The UE may also determine whether a PDU session mapped to the requested slice already exists.

The operation flow/algorithmic structure 1300 may include, at 1350, determining that a first network slice access group (NSAG) and a second NSAG are configured for the slice. The UE may receive NSAG information via NAS signaling, e.g., a registration accept or UE configuration update command message. The UE may make the determination based on the slice-priority network configuration.

The operation flow/algorithmic structure 1300 may include, at 1360, determining whether the first NSAG and the second NSAG have equal priority. The UE may make the determination based on the slice-priority network configuration in which a NAS priority and one or more AS priorities may be associated with an NSAG.

The operation flow/algorithmic structure 1300 may include, at 1370, determining whether to re-select to the highest NAS priority frequency in the highest priority tracking area, re-select to a highest AS priority frequency, stay in a current camped frequency, or re-select to a second NAS priority frequency. The UE may make the determination based on the determination in 1360, e.g., whether the first and second NSAGs have equal priority.

If the first and second NSAGs have equal priority, the UE may determine to stay in the current camped frequency.

However, if the first and second NSAGS do not have equal priority, the UE may determine the highest priority NSAG and a second priority NSAG. Based on the highest and second priority NSAGs, the UE may determine whether the UE is camped to the TA that supports the highest priority NSAG.

If the UE is not camped to the TA that supports the highest priority NSAG, the UE may determine the highest priority TA that supports the highest priority NSAG. The UE may determine the highest priority frequency in the highest priority TA that supports the highest priority NSAG. The UE may re-select to the highest priority frequency in the highest priority TA that supports the highest priority NSAG. The UE may use the slice-priority network or first or second configurations to make these determinations.

If the UE is camped to the TA that supports the highest priority NSAG, the UE may determine the highest AS priority frequency. The UE may determine whether it is camped to the highest AS priority frequency.

If the UE is not camped to the highest AS priority frequency, the UE may re-select to the highest AS priority frequency.

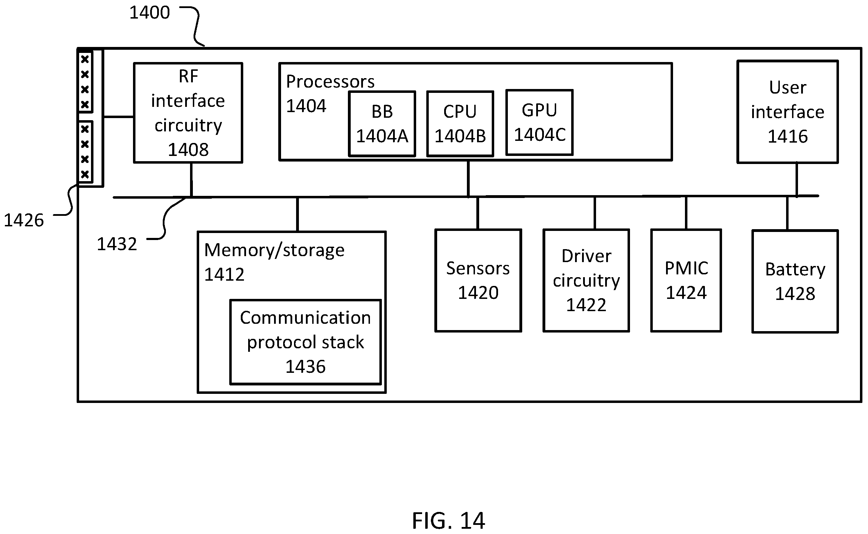

If the UE is camped to the highest AS priority frequency, the UE may determine that the RSRP associated with the second priority frequency is larger than the RSRP associated with the highest priority frequency by more than a threshold. The threshold may be 3, 4, 5, 6, 7, 8, 10, or 15 dBm. If the RSRP of the second priority frequency is larger than the RSRP of the highest AS priority frequency by more than the threshold, the UE may re-select to the second priority frequency based on the RSRP comparison above. FIG. 14 illustrates a UE 1400 in accordance with some embodiments. The UE 1400 may be similar to and substantially interchangeable with UE 104 of FIG. 1.

The UE 1400 may be any mobile or non-mobile computing device, such as, for example, a mobile phone, computer, tablet, XR device, glasses, industrial wireless sensor (for example, microphone, carbon dioxide sensor, pressure sensor, humidity sensor, thermometer, motion sensor, accelerometer, laser scanner, fluid level sensor, inventory sensor, electric voltage/current meter, or actuator), video surveillance/monitoring device (for example, camera or video camera), wearable device (for example, a smartwatch), or Internet-of-things device.

The UE 1400 may include processors 1404, RF interface circuitry 1408, memory/storage 1412, user interface 1416, sensors 1420, driver circuitry 1422, power management integrated circuit (PMIC) 1424, antenna structure 1426, and battery 1428. The components of the UE 1400 may be implemented as integrated circuits (ICs), portions thereof, discrete electronic devices, or other modules, logic, hardware, software, firmware, or a combination thereof. The block diagram of FIG. 14 is intended to show a high-level view of some of the components of the UE 1400. However, some of the components shown may be omitted, additional components may be present, and different arrangements of the components shown may occur in other implementations.

The components of the UE 1400 may be coupled with various other components over one or more interconnects 1432, which may represent any type of interface, input/output, bus (local, system, or expansion), transmission line, trace, or optical connection that allows various circuit components (on common or different chips or chipsets) to interact with one another.

The processors 1404 may include processor circuitry such as, for example, baseband processor circuitry (BB) 1404A, central processor unit circuitry (CPU) 1404B, and graphics processor unit circuitry (GPU) 1404C. The processors 1404 may include any type of circuitry, or processor circuitry that executes or otherwise operates computer-executable instructions, such as program code, software modules, or functional processes from memory/storage 1412 to cause the UE 1400 to perform operations as described herein.

The processors 1404 may perform operations associated with slice-priority optimization, such as frequency re-selection optimization or PDU establishment optimization consistent with the embodiments described herein.

In some embodiments, the baseband processor circuitry 1404A may access a communication protocol stack 1436 in the memory/storage 1412 to communicate over a 3GPP-compatible network. In general, the baseband processor circuitry 1404A may access the communication protocol stack 1436 to: perform user plane functions at a PHY layer, MAC layer, RLC sublayer, PDCP sublayer, SDAP sublayer, and upper layer; and perform control plane functions at a PHY layer, MAC layer, RLC sublayer, PDCP sublayer, RRC layer, and a NAS layer. In some embodiments, the PHY layer operations may additionally/alternatively be performed by the components of the RF interface circuitry 1408.

The baseband processor circuitry 1404A may generate or process baseband signals or waveforms that carry information in 3GPP-compatible networks. In some embodiments, the waveforms for NR may be based on the cyclic prefix OFDM (CP-OFDM) in the uplink or downlink and discrete Fourier transform spread OFDM (DFT-S-OFDM) in the uplink.

The memory/storage 1412 may include one or more non-transitory, computer-readable media that includes instructions (for example, the communication protocol stack 1436) that may be executed by one or more of the processors 1404 to cause the UE 1400 to perform various operations described herein. The memory/storage 1412 includes any type of volatile or non-volatile memory that may be distributed throughout the UE 1400. In some embodiments, some of the memory/storage 1412 may be located on the processors 1404 themselves (for example, L1 and L2 cache), while other memory/storage 1412 is external to the processors 1404 but accessible thereto via a memory interface. The memory/storage 1412 may include any suitable volatile or non-volatile memory such as, but not limited to, dynamic random access memory (DRAM), static random access memory (SRAM), erasable programmable read-only memory (EPROM), electrically erasable programmable read-only memory (EEPROM), Flash memory, solid-state memory, or any other type of memory device technology.

The RF interface circuitry 1408 may include transceiver circuitry and a radio frequency front module (RFEM) that allows the UE 1400 to communicate with other devices over a radio access network. The RF interface circuitry 1408 may include various elements arranged in transmit or receive paths. These elements may include, for example, switches, mixers, amplifiers, filters, synthesizer circuitry, and control circuitry.

In the receive path, the RFEM may receive a radiated signal from an air interface via antenna structure 1426 and proceed to filter and amplify (with a low-noise amplifier) the signal. The signal may be provided to a receiver of the transceiver that down-converts the RF signal into a baseband signal that is provided to the baseband processor of the processor 1404.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna 1426.

In various embodiments, the RF interface circuitry 1408 may be configured to transmit/receive signals in a manner compatible with NR access technologies.

The antenna 1426 may include antenna elements to convert electrical signals into radio waves to travel through the air and convert received radio waves into electrical signals. The antenna elements may be arranged into one or more antenna panels. The antenna 1426 may have antenna panels that are omnidirectional, directional, or a combination thereof to enable beamforming and multiple input, multiple output communications. The antenna 1426 may include microstrip antennas, printed antennas fabricated on the surface of one or more printed circuit boards, patch antennas, or phased array antennas. The antenna 1426 may have one or more panels designed for specific frequency bands, including bands in FR1 or FR2.

The user interface circuitry 1416 includes various input/output (I/O) devices designed to enable user interaction with the UE 1400. The user interface 1416 includes input device circuitry and output device circuitry. Input device circuitry includes any physical or virtual means for accepting an input, including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual displays, including, inter alia, one or more simple visual outputs/indicators (for example, binary status indicators such as light emitting diodes (LEDs) and multi-character visual outputs, or more complex outputs such as display devices or touchscreens (for example, liquid crystal displays (LCDs), LED displays, quantum dot displays, and projectors), with the output of characters, graphics, multimedia objects, and the like being generated or produced from the operation of the UE 1400.

The sensors 1420 may include devices, modules, or subsystems whose purpose is to detect events or changes in its environment and send the information (sensor data) about the detected events to some other device, module, or subsystem. Examples of such sensors include inertia measurement units comprising accelerometers, gyroscopes, or magnetometers; microelectromechanical systems or nanoelectromechanical systems comprising 3-axis accelerometers, 3-axis gyroscopes, or magnetometers; level sensors; flow sensors; temperature sensors (for example, thermistors); pressure sensors; barometric pressure sensors; gravimeters; altimeters; image capture devices (for example, cameras or lensless apertures); light detection and ranging sensors; proximity sensors (for example, infrared radiation detector and the like); depth sensors; ambient light sensors; ultrasonic transceivers; and microphones or other like audio capture devices.

The driver circuitry 1422 may include software and hardware elements that operate to control particular devices that are embedded in the UE 1400, attached to the UE 1400, or otherwise communicatively coupled with the UE 1400. The driver circuitry 1422 may include individual drivers allowing other components to interact with or control various I/O devices that may be present within or connected to the UE 1400. For example, the driver circuitry 1422 may include circuitry to facilitate the coupling of a universal integrated circuit card (UICC) or a universal subscriber identity module (USIM) to the UE 1400. For additional examples, driver circuitry 1422 may include a display driver to control and allow access to a display device, a touchscreen driver to control and allow access to a touchscreen interface, sensor drivers to obtain sensor readings of sensor circuitry 1420 and control and allow access to sensor circuitry 1420, drivers to obtain actuator positions of electro-mechanic components or control and allow access to the electro-mechanic components, a camera driver to control and allow access to an embedded image capture device, audio drivers to control and allow access to one or more audio devices.

The PMIC 1424 may manage the power provided to various components of the UE 1400. In particular, with respect to the processors 1404, the PMIC 1424 may control power-source selection, voltage scaling, battery charging, or DC-to-DC conversion.

In some embodiments, the PMIC 1424 may control or otherwise be part of various power-saving mechanisms of the UE 1400, including DRX, as discussed herein.

A battery 1428 may power the UE 1400, although in some examples, the UE 1400 may be mounted and deployed in a fixed location and may have a power supply coupled to an electrical grid. The battery 1428 may be a lithium-ion battery, a metal-air battery, such as a zinc-air battery, an aluminum-air battery, a lithium-air battery, and the like. In some implementations, such as in vehicle-based applications, the battery 1428 may be a typical lead-acid automotive battery.

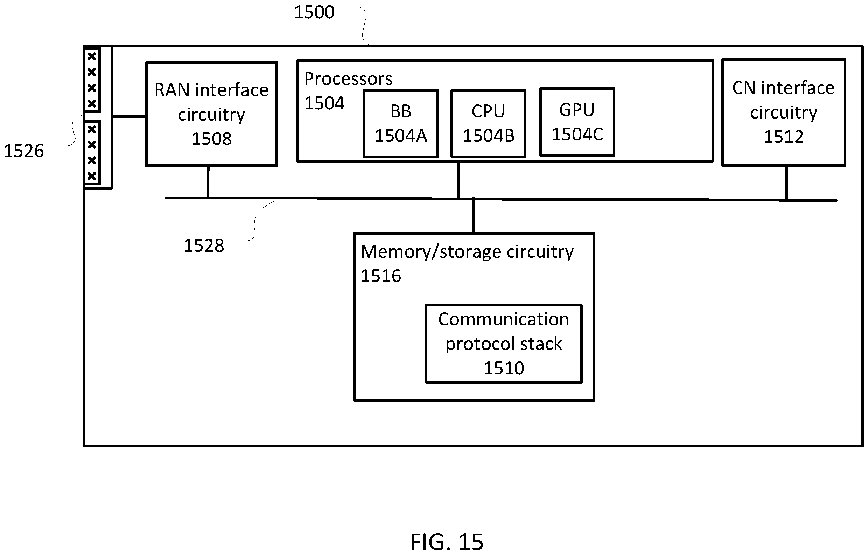

FIG. 15 illustrates a network node 1500 in accordance with some embodiments. The network node 1500 may be similar to and substantially interchangeable with base station 108, a device implementing one of the network hops, an integrated access and backhaul (IAB) node, a network-controlled repeater, or a server in a core network or external data network.

The network node 1500 may include processors 1504, RF interface circuitry 1508 (if implemented as an access node), the core node (CN) interface circuitry 1512, memory/storage circuitry 1516, and antenna structure 1526.

The components of the network node 1500 may be coupled with various other components over one or more interconnects 1528.

The processors 1504, RF interface circuitry 1508, memory/storage circuitry 1516 (including communication protocol stack 1510), antenna structure 1526, and interconnects 1528 may be similar to like-named elements shown and described with respect to FIG. 14.

The processors 1504 may perform operations associated with slice-priority optimization such as frequency re-selection optimization or PDU establishment optimization consistent with embodiments described herein.

The CN interface circuitry 1512 may provide connectivity to a core network, for example, a 5th Generation Core network (5GC) using a 5GC-compatible network interface protocol such as carrier Ethernet protocols or some other suitable protocol. Network connectivity may be provided to/from the network node 1500 via a fiber optic or wireless backhaul. The CN interface circuitry 1512 may include one or more dedicated processors or FPGAs to communicate using one or more of the aforementioned protocols. In some implementations, the CN interface circuitry 1512 may include multiple controllers to provide connectivity to other networks using the same or different protocols.

In some embodiments, the network node 1500 may be coupled with transmit-receive points (TRPs) using the antenna structure 1526, CN interface circuitry, or other interface circuitry.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more aspects, at least one of the components set forth in one or more of the preceding figures may be configured to perform one or more operations, techniques, processes, or methods as set forth in the example section below. For example, the baseband circuitry, as described above in connection with one or more of the preceding figures, may be configured to operate in accordance with one or more of the examples set forth below. For another example, circuitry associated with a UE, base station, network element, etc., as described above in connection with one or more of the preceding figures, may be configured to operate in accordance with one or more of the examples set forth below in the example section.

### Examples

Example 1 includes a method to be implemented by a user equipment (LTE), the method including: receiving first configuration information via non-access stratum (NAS) signaling and second configuration information via broadcast system information; generating a slice-priority network configuration based on the first configuration information and the second configuration information; determining a slice associated with a service or application invoked by the UE is allowed based on the slice-priority network configuration; and modifying a first packet data unit (PDU) session that existed before the UE invokes the service or application or creating a second PDU session.

Example 2 includes the method of example 1 or other examples herein, wherein said modifying a first PDU session or creating a second PDU session includes modifying a first PDU session and the method further includes: determining that an aggregated maximum bit rate (AMBR) is associated with the slice; and modifying the first PDU session that existed before the UE invokes the service or application based on said determining that the AMBR is associated with the slice.

Example 3 includes the method of examples 1 or 2 or some other examples herein, wherein said modifying a first PDU session or creating a second PDU session includes modifying a first PDU session and the method further includes: determining that the service or application invoked by the UE requires non-guaranteed bit rate (non-GBR) quality of service (QoS); and modifying the first PDU session that existed before the UE invokes the service or application based on said determining that the service or application invoked by the UE requires non-GBR QoS.

Example 4 includes the method of any of examples 1-3 or some other examples herein, wherein said modifying a first PDU session or creating a second PDU session includes creating a second PDU session and the method further includes: determining that the service or application invoked by the UE requires a PDU session that supports ultra-reliable low-latency communication (URLLC) quality of service (QoS); determining that a first PDU session does not support URLLC QoS; and creating the second PDU session that supports URLLC QoS based on said determining that the first PDU session does not support URLLC QoS.

Example 5 includes the method of any of examples 1-4 or some other examples herein, the method including: receiving first configuration information via non-access stratum (NAS) signaling and second configuration information via broadcast system information; generating a slice-priority network configuration based on the first configuration information and the second configuration information; determining, based on the slice-priority network configuration, that a slice associated with a service or application invoked by the UE is not allowed in a first tracking area (TA) associated with a serving cell of the UE; determining, based on the slice-priority network configuration, that the slice is allowed in a second TA associated with a neighbor cell; determining whether all active packet data unit (PDU) sessions of the UE could continue in the neighbor cell; and determining whether to re-select to the neighbor cell based on said determining whether all active PDU sessions of the UE could continue in the neighbor cell.

Example 6 includes the method of any of examples 1-5 or some other examples herein, further including: determining all active PDU sessions of the UE could continue in the neighbor cell; re-selecting the neighbor cell based on said determining all active PDU sessions of the UE could continue in the neighbor cell of the second TA; sending a registration request message and requested network slice selection assistance information (NSSAI) that includes an indication of the slice; receiving a registration accept message that includes an allowed NSSAI; populating, based on the allowed NSSAI, the slice-priority network configuration or a dynamic slice-priority decision table; and initiating a PDU session associated with the slice for the service or application invoked by the UE.

Example 7 includes the method of any of examples 1-6 or some other examples herein, further including: determining not all active PDU sessions of the UE could continue in the neighbor cell; identifying a PDU session of the active PDU sessions that cannot continue in the neighbor cell; releasing the PDU session of the active PDU sessions or mapping the PDU session of the active PDU sessions to a default slice; and re-selecting the neighbor cell based on said releasing or mapping of the PDU session of the active PDU sessions.

Example 8 includes a method to be implemented by a user equipment (LTE), the method including: receiving first configuration information via non-access stratum (NAS) signaling and second configuration information via broadcast system information; generating a slice-priority network configuration based on the first configuration information and the second configuration information; determining, based on the slice-priority network configuration, that a slice associated with a service or application invoked by the UE is not allowed in a current frequency band; determining, based on the slice-priority network configuration, that the slice is allowed in a neighbor frequency band; determining whether the UE is able to measure a cell in the neighbor frequency band; and determining whether to perform inter-frequency re-selection, map the service or application invoked by the UE to a packet data unit (PDU) session that existed before the UE invokes the service or application, or reject the service or application invoked by the UE, based on said determining whether the UE is able to measure the cell in the neighbor frequency band.

Example 9 includes the method of example 8 or some other examples herein, further including: determining that the UE is able to measure the cell in the neighbor frequency band; determining a list of measured cells of neighbor frequency band based on said determining that the UE is able to measure the cell in the neighbor frequency band; and determining whether all active packet data unit (PDU) sessions of the UE could continue in a candidate cell of the list of measured cells in the neighbor frequency band.

Example 10 includes the method of examples 8 or 9 or some other examples herein, further including: determining that all active PDU sessions of the UE could continue in the candidate cell in the neighbor frequency band; and performing inter-frequency re-selection to the candidate cell in the neighbor frequency band.

Example 11 includes the method of any of examples 8-10 or some other examples herein, further including: determining that not all active PDU sessions of the UE could continue in the candidate cell in the neighbor frequency band; identifying a PDU session of the active PDU sessions that cannot continue in the neighbor cell; releasing the PDU session or mapping the PDU session to a default slice; and re-selecting the candidate cell based on said releasing the PDU session or mapping the PDU session to the default slice.

Example 12 includes the method of any of examples 8-11 or some other examples herein, further including: determining that the UE is not able to measure cells in the neighbor frequency band; determining whether the service or application invoked by the UE requires a quality of service (QoS) that is not supported by a default slice; and determining whether to reject the service or application invoked by the UE or to map the service or application invoked by the UE to a packet data unit (PDU) session that existed before the UE invokes the service or application based on said determining whether the service or application invoked by the UE requires a QoS that is not supported by the default slice.Example 13 includes a method of operating a user equipment (LTE), the method including: receiving first configuration information via non-access stratum (NAS) signaling and second configuration information via broadcast system information; generating a slice-priority network configuration based on the first configuration information and the second configuration information; determining, based on the slice-priority network configuration, whether a slice associated with a service or application invoked by the UE is allowed in a serving cell; and determining whether to perform intra-frequency re-selection, map the service or application invoked by the UE to a first packet data unit (PDU) session that existed before the UE invokes the service or application, reject the service or application invoked by the UE, or initiate a second PDU session based on said determining whether the slice associated with a service or application invoked by the UE is allowed in the serving cell.

Example 14 includes the method of example 13 or some other examples herein, the method further including: determining, based on the slice-priority network configuration, that the slice is allowed in the serving cell; and initiating a PDU session for the service or application invoked by the UE.

Example 15 includes the method of any of examples 13 or 14 or some other examples herein, further including: determining, based on the slice-priority network configuration, that the slice is not allowed in the serving cell; determining that the UE is able to measure a neighbor cell; determining a list of measured neighbor cells, including the neighbor cell; and determining whether all active PDU sessions could continue in the neighbor cell.

Example 16 includes the method of any of examples 13-15 or some other examples herein, further including: determining that all active PDU sessions could continue in the neighbor cell; and performing intra-frequency re-selection to the neighbor cell.

Example 17 includes the method of any of examples 13-16 or some other examples herein, further including: determining that all active PDU sessions could not continue in the neighbor cell; identifying a third PDU session of the active PDU sessions that cannot continue in the neighbor cell; releasing the third PDU session or mapping the third PDU session to a default slice; and re-selecting the neighbor cell based on said releasing the third PDU session or mapping the third PDU session to the default slice.

Example 18 includes the method of any of examples 13-17 or some other examples herein, further including: determining, based on the slice-priority network configuration, that the slice is not allowed in the serving cell; determining that the UE is not able to measure a neighbor cell; determining whether the service or application invoked by the UE requires a quality of service (QoS) that is not supported by a default slice; and determining whether to reject the service or application invoked by the UE or to map the service or application invoked by the UE to the first PDU session that existed before the UE invokes the service or application based on said determining whether the service or application invoked by the UE requires a QoS that is not supported by the default slice.

Example 19 includes a method of operating a user equipment (LTE), the method including: receiving first configuration information via non-access stratum (NAS) signaling and second configuration information via broadcast system information or access stratum (AS); generating a slice-priority network configuration based on the first configuration information and the second configuration information; determining a slice associated with a service or application invoked by the UE is allowed based on the slice-priority network configuration; determining that a first network slice access group (NSAG) and second NSAG support the slice; determining, based on the slice-priority network configuration, relative priorities of the first and second NSAGs; and determining whether to re-select to a first highest priority frequency in a highest priority tracking area (TA), re-select to a second highest priority frequency based on the second configuration information, stay in a current camped frequency, or re-select to a second priority frequency based on said determining the relative priorities of the first and second NSAGs.

Example 20 includes the method of example 19 or some other examples herein, the method further including: determining, based on the slice-priority network configuration, that the relative priorities of the first and second NSAGs are equal; and determining to stay in a current camped frequency based on said determining that the first and second NSAGs have equal priority.

Example 21 includes the method of any of examples 19 or 20 or some other examples herein, the method further including: determining, based on the slice-priority network configuration, that the relative priorities of the first and second NSAGs are not equal; determining, based on the relative priorities of the first and second NSAGs, a high priority NSAG; and determining whether the UE is camped to the TA that supports the high priority NSAG.

Example 22 includes the method of any of examples 19-21 or some other examples herein, further including: determining that the UE is not camped to the TA that supports the high priority NSAG; determining, based on the slice-priority network configuration, a highest priority TA that supports the high priority NSAG; determining the first highest priority frequency in the highest priority TA that supports the high priority NSAG; and re-selecting to the first highest priority frequency in the highest priority TA that supports the high priority NSAG.

Example 23 includes the method of any of examples 19-22 or some other examples herein, further including: determining that the UE is camped to the TA that supports the high priority NSAG; determining the second highest priority frequency based on the second configuration information; and determining whether the UE is camped to the second highest priority frequency based on the second configuration information.

Example 24 includes the method of any of examples 19-23 or some other examples herein, further including: determining that the UE is not camped to the second highest priority frequency based on the second configuration information; and re-selecting to the second highest priority frequency based on the second configuration information.

Example 25 includes the method of any of examples 19-24 or some other examples herein, further including: determining that the UE is camped to the second highest priority frequency based on the second configuration information; determining that a reference signal received power (RSRP) associated with the second priority frequency is larger than the RSRP associated with the second highest priority frequency based on the second configuration information by more than a threshold; and re-select to the second priority frequency based on said determining that the RSRP) associated with the second priority frequency is larger than the RSRP associated with the second highest priority frequency based on the second configuration information by more than the threshold.

Another example may include an apparatus comprising logic, modules, or circuitry to perform one or more elements of a method described in or related to any of examples 1-25, or any other method or process described herein.

Another example may include a method, technique, or process as described in or related to any of examples 1-25, or portions or parts thereof.

Another example may include an apparatus comprising: one or more processors and one or more computer-readable media comprising instructions that, when executed by the one or more processors, cause the one or more processors to perform the method, techniques, or process as described in or related to any of examples 1-25, or portions thereof.

Another example includes a signal as described in or related to any of examples 1-25, or portions or parts thereof.

Another example may include a datagram, information element, packet, frame, segment, PDU, or message as described in or related to any of examples 1-25, or portions or parts thereof, or otherwise described in the present disclosure.

Another example may include a signal encoded with data as described in or related to any of examples 1-25, or portions or parts thereof, or otherwise described in the present disclosure.

Another example may include a signal encoded with a datagram, IE, packet, frame, segment, PDU, or message as described in or related to any of examples 1-25, or portions or parts thereof, or otherwise described in the present disclosure.

Another example may include an electromagnetic signal carrying computer-readable instructions, wherein execution of the computer-readable instructions by one or more processors is to cause the one or more processors to perform the method, techniques, or process as described in or related to any of examples 1-25, or portions thereof.

Another example may include a computer program comprising instructions, wherein execution of the program by a processing element is to cause the processing element to carry out the method, techniques, or process as described in or related to any of examples 1-25, or portions thereof.

Another example may include a signal in a wireless network as shown and described herein.

Another example may include a method of communicating in a wireless network as shown and described herein.

Another example may include a system for providing wireless communication as shown and described herein.

Another example may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of aspects to the precise form disclosed. Modifications and variations are possible in light of the above teachings or may be acquired from practice of various aspects.

Although the aspects above have been described in considerable detail, numerous variations and modifications will become apparent to those skilled in the art once the above disclosure is fully appreciated. It is intended that the following claims be interpreted to embrace all such variations and modifications.

## Claims

1. A method comprising:
processing first configuration information received via non-access stratum, NAS, signaling (no) and second configuration information received via broadcast system information;
generating a slice-priority network configuration based on the first configuration information and the second configuration information;
determining a slice associated with a service or application is allowed based on the slice-priority network configuration; and
modifying a first packet data unit, PDU, session (130) that existed before the service or application was invoked or creating a second PDU session.

2. The method of claim 1, wherein said modifying a first PDU session or creating a second PDU session comprises modifying a first PDU session and the method further comprises:
determining that an aggregated maximum bit rate, AMBR, is associated with the slice; and
modifying, based on said determining that the AMBR is associated with the slice, the first PDU session that existed before the service or application was invoked.

3. The method of any of the claims 1 or 2, wherein said modifying a first PDU session or creating a second PDU session comprises modifying a first PDU session and the method further comprises:
determining that the service or application is associated with a non-guaranteed bit rate, non-GBR, quality of service, QoS; and
modifying, based on said determining that the service or application is associated with the non-GBR QoS, the first PDU session that existed before the service or application was invoked.

4. The method of any of the claims 1 to 3, in particular of claim 1, wherein said modifying a first PDU session or creating a second PDU session comprises creating a second PDU session and the method further comprises:
determining that the service or application is associated with a PDU session that supports ultra-reliable low-latency communication, URLLC, quality of service, QoS;
determining that a first PDU session does not support URLLC QoS; and
creating the second PDU session that supports URLLC QoS based on said determining that the first PDU session does not support URLLC QoS.

5. The method of any of claims 1 to 4, in particular of claim 1 or 4, wherein said modifying a first PDU session or creating a second PDU session comprises creating a second PDU session and the method further comprises:
determining that the service or application is associated with a reflective quality of service, QoS;
determining that the first PDU session does not support the reflective QoS; and
creating the second PDU session that supports reflective QoS.

6. The method of any of claims 1 to 5, in particular of claim 1, 4, or 5, wherein said modifying a first PDU session or creating a second PDU session comprises creating a second PDU session and the method further comprises:
determining that the slice is allowed in a tracking area, TA;
determining that the slice is allowed in a frequency band;
determining that the slice is allowed in a physical cell identifier, PCI; and
creating the second PDU session that supports reflective QoS.

7. A baseband processor comprising:
processing circuitry (1404) configured to:
process first configuration information received via non-access stratum, NAS, signaling (110) and second configuration information via broadcast system information;
generate a slice-priority network configuration based on the first configuration information and the second configuration information;
determine, based on the slice-priority network configuration, that a slice associated with a service or application is not allowed in a first tracking area, TA, associated with a current serving cell;
determine, based on the slice-priority network configuration, that the slice is allowed in a second TA associated with a neighbor cell; and
re-select the neighbor cell in the second TA.

8. The baseband processor of claim 7, wherein the processing circuitry (1404) is further configured to:
determine not all active PDU sessions could continue in the neighbor cell;
identify a PDU session (130) of the active PDU sessions that cannot continue in the neighbor cell; and
releasing the PDU session (130) of the active PDU sessions or mapping the PDU session (130) of the active PDU sessions to a default slice PDU session.

9. One or more computer-readable media having instructions that are to be executed to cause a processing circuitry (1404) to:
process first configuration information received via non-access stratum, NAS, signaling (110) and second configuration information received via broadcast system information;
generate a slice-priority network configuration based on the first configuration information and the second configuration information; and
determine whether a slice associated with a service or application is allowed in a frequency band, wherein in response to determining that the slice is not allowed in the frequency band:
determine whether a cell in a neighbor frequency band can be measured; and
determine, based on said determining whether the cell in the neighbor frequency band can be measured, whether to:
perform inter-frequency re-selection;
map the service or application to a first packet data unit, PDU, session (130) that existed before the service or application was invoked; or
reject the service or application.

10. The one or more computer-readable media of claim 9, wherein said determining whether a cell in the neighbor frequency band can be measured comprises determining that the cell in the neighbor frequency band can be measured, and the instructions are to be executed to further cause the processing circuitry (1404) to:
identify a list of measured cells of the neighbor frequency band; and
determine whether all active packet data unit, PDU, sessions (130) could continue in a candidate cell of the list of measured cells in the neighbor frequency band.

11. The one or more computer-readable media of claim 9 or 10, wherein said determining whether all active PDU sessions could continue in a candidate cell of the list of measured cells in the neighbor frequency band comprises:
determining that all active PDU sessions could continue in the candidate cell in the neighbor frequency band, and the instructions are to be executed to further cause the processing circuitry (1404) to perform inter-frequency re-selection to the candidate cell in the neighbor frequency band; or
determining that not all active PDU sessions could continue in the candidate cell in the neighbor frequency band, and the instructions are to be executed to further cause the processing circuitry (1404) to:
identify a second PDU session of the active PDU sessions that cannot continue in the neighbor cell;
release the second PDU session or map the second PDU session to a default slice; and
re-select the candidate cell based on said releasing the second PDU session or mapping the second PDU session to the default slice.

12. The one or more computer-readable media of any of claims 9-11, wherein said determining whether a cell in the neighbor frequency band can be measured comprises determining that the cell in the neighbor frequency band cannot be measured, and the instructions are to be executed to further cause the processing circuitry (1404) to:
determine that the service or application is associated with a quality of service, QoS, that is not supported by a default slice, and reject the service or application; or
determine that the service or application is associated with a quality of service, QoS, supported by a default slice and map the service or application to the first PDU session that existed before the service or application was invoked.

13. The one or more computer-readable media of any of claims 9 to 12, in particular of claims 9-11, wherein said determine whether the slice is allowed in a frequency band comprises determine that the slice is allowed in the frequency band, and the instructions are to be executed to further cause the processing circuitry (1404) to:
process first configuration information received via non-access stratum, NAS, signaling (no) and second configuration information received via broadcast system information;
generate a slice-priority network configuration based on the first configuration information and the second configuration information;
determine, based on the slice-priority network configuration, that a slice associated with a service or application is not allowed in a current physical cell identifier, PCI;
determine whether a neighbor PCI can be measured; and
determine, based on said determining whether the neighbor PCI can be measured, whether to:
perform intra-frequency re-selection;
map the service or application to a first packet data unit, PDU, session that existed before the service or application was invoked; or
reject the service or application.

14. The one or more computer-readable media of any of claims 9 to 13, in particular of claim 13, wherein said determine whether a neighbor PCI can be measured comprises determine that the neighbor PCI cannot be measured, and the instructions are to be executed to further cause the processing circuitry (1404) to:
determine that the service or application is associated with a quality of service, QoS, that is not supported by a default slice; and
reject the service or application.

15. The one or more computer-readable media of any of claims 9 to 13, in particular of claim 13, wherein said determine whether a neighbor PCI can be measured comprises determine that the neighbor PCI cannot be measured, and the instructions are to be executed to further cause the processing circuitry (1404) to:
determine that the service or application is associated with a quality of service, QoS, supported by a default slice; and
map the service or application to the first PDU session that existed before the service or application was invoked.
